(19)

**Europäisches Patentamt**
**European Patent Office**
**Office européen des brevets**

(11) **EP 4 671 805 A1**

(12) **EUROPEAN PATENT APPLICATION**

(43) Date of publication:
**31.12.2025 Bulletin 2026/01**

(51) International Patent Classification (IPC):
**G01S 7/00** *(2006.01)* **G01S 7/292** *(2006.01)*
**G01S 7/35** *(2006.01)* **G01S 13/58** *(2006.01)*

(21) Application number: **25171270.9**

(22) Date of filing: **17.04.2025**

(52) Cooperative Patent Classification (CPC):
**G01S 13/582; G01S 7/006; G01S 7/292;**
**G01S 7/354; G01S 13/584;** G01S 7/2883

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **28.06.2024 US 202418757622**

(71) Applicant: **Intel Corporation**
**Santa Clara, CA 95054 (US)**

(72) Inventors:
• **HEWAVITHANA, Thushara**
  **Chandler (US)**
• **HAMIDI-SEPEHR, Fatemeh**
  **San Jose, 95117 (US)**
• **VANNITHAMBY, Rath**
  **Portland, 97229 (US)**
• **MERWADAY, Arvind**
  **Beaverton (US)**

(74) Representative: **Viering, Jentschura & Partner**
**mbB**
**Patent- und Rechtsanwälte**
**Am Brauhaus 8**
**01099 Dresden (DE)**

(54) **METHODS AND DEVICES FOR RANGE-DOPPLER PROCESSING**

(57) An apparatus including a memory and a processor configured to: obtain a range-Doppler periodogram of received sensing signals, wherein the range-Doppler periodogram is representative of one or more targets within a Doppler span; estimate a range-Doppler coordinate outside the Doppler span for the one or more targets; and selectively process a range-Doppler spectrum of the received sensing signals for the range-Doppler coordinate within a Doppler interval smaller than the Doppler span.

500

De-noise 510

↓

Keystone in slow time direction 520

↓

Range iFFT in fast frequency direction 530

↓

Slow time Doppler FFT 540

↓

CFAR 550

↓

...

**FIG. 5A**

EP 4 671 805 A1

## Description

### Technical Field

Various embodiments relate generally to methods and devices for range-Doppler processing.

### Background

The next generation networks, such as 5G and 6G are expected to have radar sensing capabilities within the communication network. Therefore, radio access network (RAN) infrastructure (e.g. base stations) will not only play a role in telecommunication, but they are also expected to be capable of sensing the environment surrounding the RAN. Sensory data could be used in several applications including digital twin, traffic management, industrial manufacturing, autonomous vehicles, and the like. Depending on the intended use case, the system may need to be able to support the required range and/or Doppler resolution and unambiguously detect targets up to a maximum expected range and velocity.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. 1 shows an example of a radio communication network;
FIG. 2 depicts an exemplary device architecture for wireless communications;
FIG. 3 shows an example of a conventional radar sensing receiver processing diagram;
FIG. 4 illustrates example target images in a 2D range-Doppler spectrum;
FIG. 5A illustrates an example flow diagram in accordance with various aspects of the disclosure;
FIG. 5B illustrates an example flow diagram in accordance with various aspects of the disclosure;
FIG. 6 depicts example target images in 2D range-Doppler spectrum;
FIG. 7 depicts an example of a flowchart of a process;
FIG. 8 shows an example of a flowchart in accordance with various aspects of the disclosure;
FIG. 9 depicts an example of a flowchart for Doppler ambiguity detection in accordance with various aspects of the disclosure;
FIG. 10 depicts an exemplary illustration of an uninterrupted range-Doppler spectrum;
FIG. 11 depicts an example of a selectively processed range-Doppler spectrum in accordance with various aspects of the disclosure;
FIG. 12A and Fig. 12B illustrate respective example range-Doppler representations of a Doppler ambiguous target with respect to Doppler information;
FIG. 13 illustrates an example process flow in accordance with various aspects of the disclosure.
FIG. 14 depicts an example of a method in accordance with various aspects of the disclosure.

### Description

The term "exemplary" is used herein to mean "serving as an example, instance, or illustration". Any embodiment or design described herein as "exemplary" is not necessarily to be construed as preferred or advantageous over other embodiments or designs.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

The term "periodogram" used herein may refer to a representation of an estimate of a spectral density of a signal, which may represent the distribution of signal power over designated frequency range at different frequencies. The term "range-Doppler periodogram" as used herein may refer to a two-dimensional representation of a signal in a range-Doppler domain. Illustratively, a range-Doppler periodogram may include estimate range information obtained via a performed Fourier transform along the fast-time (e.g. a pulse dimension), separating the signal into different range bins. The range-Doppler periodogram may further include estimate Doppler information obtained via a Fourier transform along the slow time (e.g. pulse-to-pulse) dimension, separating the signal into different Doppler frequency shifts.

The term "range-Doppler spectrum" may refer to a representation of a received radar signal energy or power distribution, which may represent the received signal in a range-Doppler domain. Illustratively, a range-Doppler spectrum may include range information (e.g. range profiles) obtained by fast-time processing of the received signal, separating the received signal into different range bins. The range-Doppler spectrum may further include Doppler information obtained by slow-time processing of the received separating the received signal into the Doppler frequency shifts.

Correspondingly, range information described above may represent detected objects at various distances to the antenna (e.g. from the sensing system) performing the sensing, and Doppler information described above may represent velocities (e.g. radial velocities) of detected objects. In some cases, "range-Doppler periodogram" may include calculated squared magnitudes of the two-dimensional (2D) Fourier transform of the received signal matrix, which includes the estimate Range information and the estimate Doppler information as described above.

In accordance with various aspects described herein, each of the range-Doppler periodogram and the range-Doppler spectrum may be represented by two respective sets of paired data, a first respective set representing range information and a second respective set representing Doppler information, such that each respective range information paired with a respective Doppler information, a respective matrix, a respective image or any other respective at least two-dimensional data representation (e.g. cartesian domain on which each of the axes is to represent a corresponding feature (i.e. range and Doppler)). These representations may differ from that the periodogram is representative of an estimate of the spectrum according to a designated method (e.g. periodogram method), while the range-Doppler spectrum is the direct output of slow-time processing and fast-time processing of the received signal (i.e. direct output of matched filtering and Fourier processing).

The term "fast time processing" may relate to obtaining a range information (e.g. range profile, range bins) of a target by processing received samples from a single pulse of the sensing system. Fast time processing may include matched filtering implementation in order to determine the range information of the target. The term "slow time processing" may relate to obtaining Doppler information by processing received samples from different pulses of the sensing system. Time interval of two consecutive pulses may be based on signal repetition interval (SRI). Slow time processing may involve implementation of Fast Fourier Transform (FFT) to obtain Doppler information (e.g. Doppler frequency). In some aspects, samples received from the single pulse of the sensing system may constitute a fast time axis and samples received from the different pulses of the sensing system may constitute a slow time axis. Those axes may form a two-dimensional fast time/slow time matrix in which the relevant processes (e.g. FFT) may be applied to obtain range-Doppler spectrum.

The term "span" may refer to a portion or a section defined between two designated points. The term "Doppler span" may refer to a designated interval within the Doppler domain (i.e. between two Doppler values). More particularly, in this context, the term "Doppler span" may refer to an interval within the Doppler domain that is defined based on symbol repetition interval (SRI) (pulse repetition frequency (PRF)) of the sensing operation, with which the sensing signals are received. Illustratively, the Doppler span may be between $[-0.5/T_{SRI}, 0.5/T_{SRI}]$ as described herein. In some cases, a "natural Doppler span" or an "unambiguous Doppler span" may refer to a range of Doppler frequencies measured by the sensing system (e.g. a radar system). Such measurements within the Doppler span (i.e. unambiguous Doppler span) may reflect detected targets deemed unambiguous (i.e. without Doppler ambiguity).

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790 960 MHz, 1710 2025 MHz, 2110-2200 MHz, 2300-2400 MHz, 2500-2690 MHz, 698 790 MHz, 610 790 MHz, 3400 3600 MHz, etc., where some bands may be limited to specific region(s) and/or countries), IMT advanced spectrum, IMT-2020 spectrum (expected to include 3600 3800 MHz, 3.5 GHz bands, 700 MHz bands, bands within the 24.25 86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85 5.925 GHz) and 63 64 GHz, bands currently allocated to WiGig such as WiGig Band 1 (57.24 59.40 GHz), WiGig Band 2 (59.40 61.56 GHz) and WiGig Band 3 (61.56 63.72 GHz) and WiGig Band 4 (63.72 65.88 GHz), the 70.2 GHz-71 GHz band, any band between 65.88 GHz and 71 GHz, bands currently allocated to automotive radar applications such as 76 81 GHz, and future bands including 94 300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on

a prioritized access to the spectrum e.g., with highest priority to tier 1 users, followed by tier 2, then tier 3, etc. users, etc. The apparatuses and methods described herein can also use radio communication technologies with different Single Carrier or OFDM flavors (CP OFDM, SC FDMA, SC OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

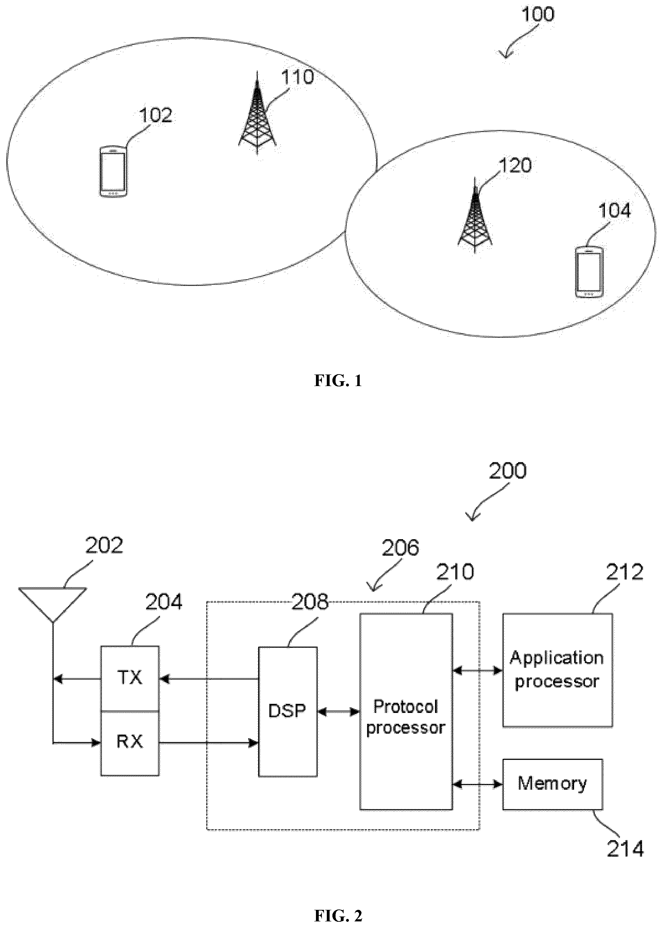

FIGs. 1 and 2 depict a general network and device architecture for wireless communications, including in particular aspects of a mobile communication network. In particular, FIG. 1 shows exemplary radio communication network 100 according to some aspects, which may include terminal devices 102 and 104 and network access nodes 110 and 120. Radio communication network 100 may communicate with terminal devices 102 and 104 via network access nodes 110 and 120 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device according to various aspects provided in this disclosure. The communication device may include a terminal device 102, and it will be referred to as communication device 200, but the communication device may also include various aspects of network access nodes 110, 120 as well. In some examples, the communication device 200 may be a further entity within the radio communication network 100, which may communicate with multiple network access nodes 110, 120. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks.

Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness, the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

In some examples, communication device 200 may include a communication circuit. Communication device 200 may transmit and receive communication signals with the communication circuit. The communication circuit may be couplable to specified communication interfaces (e.g E2, A1, O1, etc.). In some aspects, such communication interfaces may be implemented by wireless or wired connections (e.g. backhaul, etc.). In particular, the communication circuit may transmit and receive communication signals to/from network access nodes 110, 120, or an intermediate entity within the radio communication network 100 that may communicate with network access nodes 110, 120. The communication circuit may include RF transceiver 204, and in such an example, the RF transceiver 204 may be configured to transmit and receive communication signals via the respective communication interface.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators.

Exemplary hardware accelerators can include Fast Fourier Transform (FFT) circuits and encoder/decoder circuits. In some aspects, the processor and hardware accelerator components of digital signal processor 208 may be realized as a coupled integrated circuit.

In accordance with various aspects provided herein, the digital signal processor 208 may implement the AI/ML and also AI/ML-based RRM algorithm operations some of which are described herein, and exemplarily via one or more dedicated hardware circuits (e.g., ASICs, FPGAs, and other hardware). In particular, the communication device 200 may include a plurality of such digital signal processors (e.g. digital signal processor 208) that are configured to implement multiple RRM algorithms. In an O-RAN environment, digital signal processors may perform processing, in particular for xApps or implement xApps.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

Application processor 212 may be configured to implement various operations provided herein, in particular with respect to the implementation of one or more AI/MLs that are used for RRM of multiple cells associated with multiple network access nodes (e.g. network access node 110, 120) serving to multiple terminal devices (e.g. terminal devices 102, 104). In some examples, application processor 212 may control an external processor that is configured to implement the one or more AI/MLs. In some aspects, the external processor may be particularly suitable for implementing AI/MLs, such as GPUs, neuromorphic chips or circuits, parallel processors, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, communication device 200 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

Various aspects disclosed herein relate to target detection performed through received sensing signals from an object. A major step taken forward in radar sensing receiver (Rx) processing to estimate the range and Doppler of received sensing signals associated with targets is the use of a two-dimensional range-Doppler periodogram. The range-Doppler periodogram can be computed in an efficient manner by performing back-to-back Fast Fourier Transform (FFT) operations in fast frequency and slow time direction. Targets (e.g. objects of interest) then may appear in the two-dimensional (2D) range-Doppler periodogram based on their distance from the radar transceiver, and their velocities.

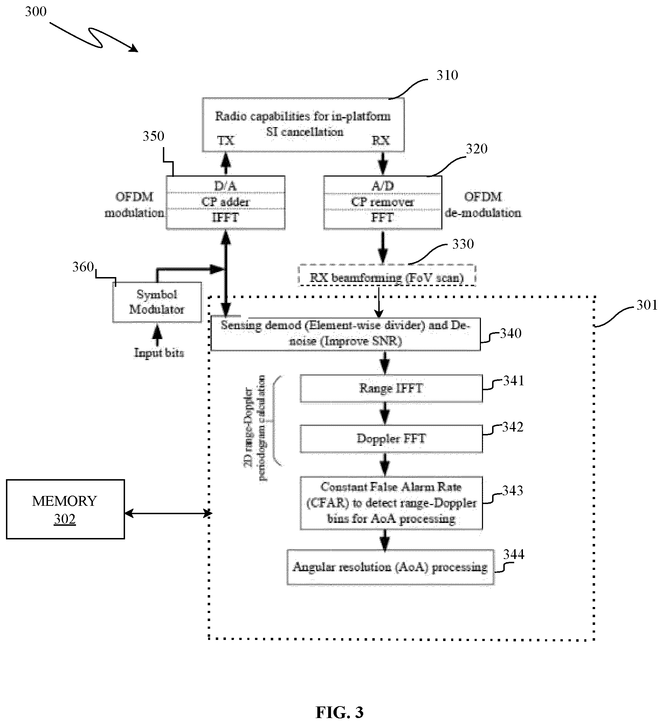

Fig. 3 illustrates a radar sensing device in accordance with various aspects described herein. Illustratively a communication device (e.g. the communication device 200) may include the radar sensing device 300. For the example, the radar sensing device 300 is for a radar system. The radar sensing device 300 may include an RF transceiver (e.g. the RF transceiver 204) for radio capabilities for in-platform symbol interference (SI) in the transmit (Tx) and receive (Rx) path. In an example, a sensing signal may be received at the receiver side of the radar sensing device 300. In some examples, the receiver side include an antenna system (e.g. the antenna system 202). In accordance with various aspects disclosed herein, the term "sensing signal" may refer to or include a signal (e.g. a radiofrequency signal) sent by a transmitter (e.g. via Tx path) of the radar sensing device 300. Such a signal may be transmitted toward an area in order to detect an object (e.g. target) within the area. Accordingly, the term "received sensing signal" may refer to or include a signal reflected from the object. In an example, an amount of transmitted signal energy may bounce back from the object to arrive at the receiver of the radar sensing device 300. In some aspects, transmitter and/or receiver of the radar sensing device with their use may also be realized within the RF transceiver 204 of the communication device 200.

In some aspects, the transmitted signal may be an orthogonal frequency division multiplexing (OFDM) signal (i.e. OFDM symbols). In some examples, a portion of the transmitted signal may be reflected from an object (e.g. a target). Therefore, OFDM symbols may echo from the object to arrive at the receiver of the radar sensing device 300. In such a case, the received sensing signal may refer to or include OFDM symbols as received sensing symbols. In some aspects aligned with the disclosure, received sensing signals and received sensing signal symbols may be used to perform target detection.

The radar sensing device 300 may include a demodulator 320. The demodulator 320 may be configured to perform OFDM demodulation on received sensing signals. For example, the demodulator may include an analog-to-digital converter in order to convert the received sensing signal into digital domain. The demodulator 320 may further include cyclic prefix remover to remove cyclic prefix component of the digital signal. The demodulator 320 may further include a Fast Fourier Transformer to apply Fast Fourier Transformation on the digital signal to obtain frequency components of the received sensing signal. The FFT may demodulate OFDM symbols and separate the received sensing signal into individual orthogonal subcarriers in the frequency domain. In some aspects, the received sensing signal in the frequency domain may include a Doppler information of the target (e.g. velocity). In some examples, the radar sensing device 300 may include an Rx beamformer. The Rx beamformer may in order to scan Field of View (FoV) of the radar sensing device 300 steer the receive beam in different directions

Furthermore, the radar sensing device 300 may include means to perform range-Doppler processing. Illustratively, the radar sensing device 300 may include one or more processors (e.g. the baseband modem 206, the application processor 212), each employing one or more processor cores. Illustratively, a processor 301 may implement the aspects described with respect to blocks 340, 341, 343, and 344. In some examples, the processor 301 may be a processor of the communication device 200. In some aspects, the processor 301 may include an arithmetic logic unit (ALU), a control unit, or a plurality of registers. The processor 301 may interact with a memory 302 unit via a communication interface 303. The memory 302 may store data and/or instructions for the processor 301 to use and/or execute. The processor 301 may decode the instructions and execute them accordingly.

In various examples, the processor 301 may include a central processing unit (CPU), a graphics processing unit (GPU), a hardware acceleration unit (hardware) more dedicated hardware accelerator circuits (e.g., ASICs, FPGAs, and other hardware)), a neuromorphic chip, and/or a controller. The processor 301 may be implemented in one processing unit, e.g. a system on chip (SOC), or a processor, another processor (including those discussed herein), or any appropriate combination thereof. The memory/storage devices 302 may include main memory, disk storage, or any suitable combination thereof. The memory/storage devices 302 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

At block 340, the processor 301 may implement a sensing symbol demodulation. The sensing symbol demodulation may be implemented as an element-wise divider. Such an implementation may be essential for deriving information (i.e. Doppler information) about the target. In some aspects, the sensing symbol demodulation may assist in obtaining the target's range profile and/or velocity. Additionally, or alternatively, the sensing symbol demodulation may assist in obtaining the original information within the received sensing signal. In some examples, the received sensing signal echoed from the target may be associated with a low signal-to-noise ratio. Therefore, the processor 301 may implement denoising on the received sensing signal in order to enhance the SNR ratio which may be useful for target detection.

The processor 301 may implement fast time processing for the received sensing signal. In some examples, the fast time processing may refer to processing of the sensing signal received within each signal repetition interval (SRI). In some aspects, fast time processing may include operations related to fast time direction. Accordingly, the fast time direction may refer to the range direction within the range-Doppler domain. The fast time processing may include the implementation of range iFFT to process the received sensing signal. At block 341, the processor 301 may implement range iFFT as a part of fast time processing in order to transfer an obtained range profile (e.g. obtained through implementing matched filter and range FFT) associated with the target to the time domain.

The processor 301 may implement slow time processing for the received sensing signal. In some examples, the fast time processing may refer to processing of the sensing signal received within a plurality of signal repetition interval (SRI). In some aspects, slow time processing may include operations related to slow time direction. Accordingly, the slow time direction may refer to the Doppler direction within the range-Doppler domain. The slow time processing may include the implementation of Doppler FFT to process the received sensing signal. At block 342, the processor 301 may implement Doppler FFT as a part of slow time processing in order to obtain Doppler frequency shifts occurred due to motion of the target. In some examples, Doppler FFT may be a relevant process to derive certain Doppler information (e.g. velocity) of the target.

In some examples, fast time processing and slow time processing may lead to a range-Doppler periodogram estimation. In particular, implementation of range iFFT at block 341 and Doppler FFT at block 342 may be leveraged to estimate a range-Doppler periodogram for target detection. In some aspects, range-Doppler periodogram may refer to a two-dimensional (2D) representation including range and Doppler axes. The range-Doppler periodogram may additionally, or alternatively, refer to a matrix presenting range and Doppler directions. In a sense, the range-Doppler periodogram may represent an estimation of the power spectral density of the received sensing signal within the range-Doppler domain.

The processor 301 may implement processes (i.e. range iFFT and Doppler FFT) at blocks 341 and 342 in a reverse order to estimate a range-Doppler periodogram without compromising the performance. That is, the processor 301 may implement Doppler FFT (at block 342) followed by implementing the range iFFT (at block 341) without suffering from performance degradation.

At block 343, the processor 301 may implement a constant false alarm rate (CFAR) in order to reliably detect targets within the range-Doppler domain for further processing. Further processing may exemplary include AoA processing. In some examples, the range-Doppler periodogram estimation may be an input for CFAR processing to eliminate false targets. For example, false targets may be associated with a signal power that falls below a threshold set for the CFAR. Such targets may be declined and only the targets with a signal power that falls above the threshold may be selected for e.g. AoA processing. At block 344, the processor 301 may implement AoA processing for the selected targets.

Although the processes for the received sensing signal are explained in detail. The processing diagram 300 may also reveal a complementary processing scheme for the sensing signal in the Tx path. For example, at block 350 OFDM modulation processes may be implemented for the sensing signal, as opposed to demodulation processes depicted at block 320. OFDM modulation processes may include a digital-to-analog conversion for transmission of the sensing signal (e.g. OFDM sensing signal). CP adding may be performed followed by the implementation of iFFT to transfer the sensing signal from frequency domain to time domain. At block 360, a symbol modulator may use input bins to modulate the sensing signal.

Wide sensing bandwidths may provide better range resolution, while longer sensing integration timeframe may provide better Doppler resolution. However, when the product of those (i.e. product of total sensing bandwidth and total sensing frame duration) yields a considerably high result, that may cause range/Doppler migration to occur. Range migration may be attributed to the dispersion of the image of the high-mobility targets (e.g. targets with high velocity) within the range-Doppler domain. The dispersion herein may refer to a disruption of the target image in the form of blurriness or smearing.

In particular, a target with low enough Doppler frequency, and a corresponding low velocity, is likely to manifest a sharper image in the two-dimensional (2D) range-Doppler periodogram, provided that the velocity of the target satisfies the following disequilibrium:

$$\frac{2 \times v}{c_0} < \frac{1}{Sensing\ time\ frame \times Sensing\ BW}$$

where the parameter v stands for the target velocity, and parameter $c_0$ stands for the speed of light. On the contrary, if the target has a higher Doppler frequency, and accordingly its velocity does not conform with the disequilibrium (e.g. target with high velocity), then the target (i.e. image of the target) is likely to appear more dispersed in comparison with the image of the low-frequency target.

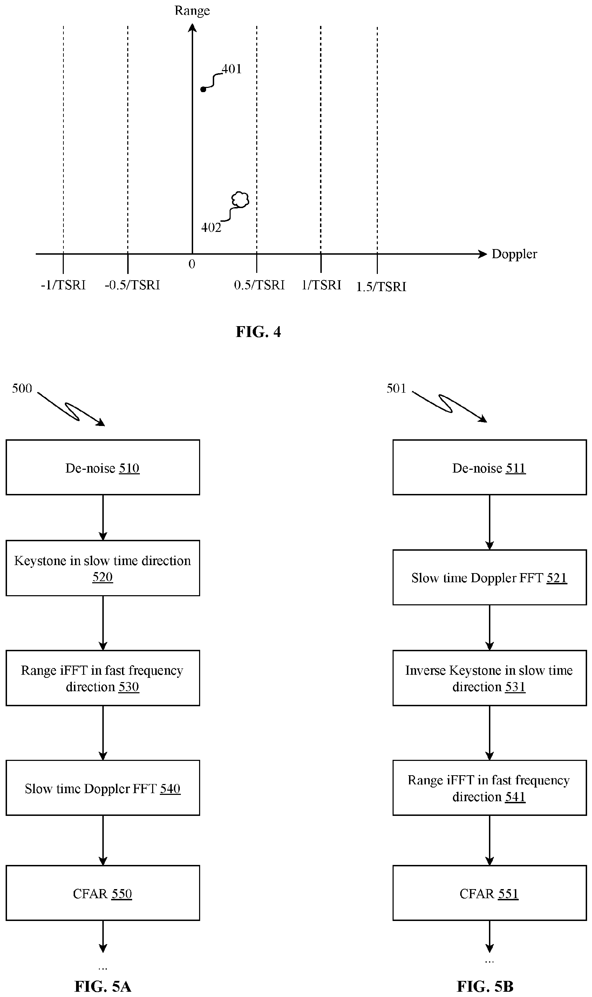

Fig. 4 shows an example of a 2D range-Doppler spectrum including two identified target images, each target image associated with a different target, namely a first target image 401 and a second target image 402. As described herein, the 2D range-Doppler spectrum may refer to a two-dimensional representation of a signal in a range-Doppler domain, as illustrated here. Representation-wise, a 2D range-Doppler spectrum may be similar to a 2D range-Doppler periodogram with the difference that it would represent a two-dimensional representation of an estimate signal in the range-Doppler domain. The vertical axis may represent the range domain and the horizontal axis may represent the Doppler domain, while the respective value at each range-Doppler pair (i.e. a range-Doppler coordinate) may correspond to a signal power or a signal intensity corresponding to that particular range and Doppler frequency. Illustratively, the first target image 401 and the second target image 402 may be target images identified based on an any known target identification methods (e.g. thresholding, peak detection and clustering, normalization, etc.). Correspondingly, a target or a target image used herein may refer to targets identified via any known methods by processing of a received sensing signals at range-Doppler domain.

The range-Doppler spectrum may indicate that both target images are identifiable within the Doppler span (i.e. unambiguous Doppler span), as the Doppler span is calculated as a function of symbol repetition interval. In particular, the Doppler span is given by:

[-0.5/TSRI, 0.5/TSRI), where TSRI stands for symbol repetition interval denoting the time spacing between the sensing symbols within the sensing frame. The first target image 401 may represent the image closer to the range axis, which may illustratively have a focused peak at a single or a predefined number of range-Doppler cell(s). Accordingly, the second target image 402 may represent a dispersed image identified closer to the 0.5/TSRI. A dispersed image or a dispersed target image may refer to a target response that appears as spread or smeared along both the range and Doppler dimensions compared to a non-dispersed image (e.g. the first image 401) with a focused peak at a single or a predefined number of range-Doppler cell(s). Therefore, while the first target image 401 may represent a target without range migration, the second target image 402 may be attributed to a target with range migration due to the appear of the second target image being smeared. Considering both targets have Doppler frequencies within the Doppler span, none of them may be attributed to Doppler ambiguity.

In order to overcome the shortcomings caused by the range migration, signal processing algorithms may be considered to put forward an effort to mitigate the issue. Range migration may conventionally be addressed by Keystone transformation (KT) which rescales slow-time axis for each fast frequency, or by inverse-Keystone (inv-KT) transformation which rescales slow-frequency axis for each fast frequency. For instance, techniques related to Keystone transformation may be used to compensate the second target image 402 that is smeared and defocused due to range migration as denoted. By implementing KT and/or inv-KT, range migration effects may be mitigated, providing an effective integration of the second target image 402 across the Doppler.

Fig. 5A shows an example of a flow diagram 500 representing a range-Doppler processing for range migration compensation using KT, which the processor 301 may implement. At block 510, de-noising may be performed to increase the signal-to-noise ratio (SNR) of a received sensing signal associated with a target. Upon de-noising, KT in slow time direction may be applied at block 520 followed by performing range iFFT in fast frequency direction at block 530. In order to complete calculation of the range-Doppler periodogram, slow time Doppler FFT may be implemented at block 540. Thus, operations performed at blocks 520, 530 and 540 may be associated with obtaining a range-Doppler periodogram. At block 550 a constant false alarm rate (CFAR) may be provisioned to detect range-Doppler bins for angle of arrival (AoA) processing.

Fig. 5B shows an example of another flow diagram 501 representing a range-Doppler processing for range migration compensation using inv-KT method, which the processor 301 may implement. At block 511, de-noising may be performed to increase the signal-to-noise ratio (SNR) of a received sensing signal associated with a target in a similar manner depicted in Fig. 5A. Upon de-noising, slow time Doppler FFT may be performed at block 521 followed by performing inv-KT in slow time direction at block 531 to compensate migration. In order to complete calculation of the range-Doppler periodogram, range iFFT in fast frequency direction may be implemented at block 541. At block 551 a constant false alarm rate (CFAR) may be provisioned to detect range-Doppler bins for angle of arrival (AoA) processing.

In some aspects, a target may have a Doppler frequency greater than $0.5/T_{SRI}$. This generally means that velocity of the target is associated with a value that is high enough to cause a radar system to perform inaccurate measurements regarding Doppler frequency of the target. This may be due to the resulting Doppler shift of the target exceeding the Nyquist limit dictated by SRI. Since the Doppler span is declared in-between $[-0.5/T_{SRI}, 0.5/T_{SRI})$, a target with a Doppler frequency greater than $0.5/T_{SRI}$ may cause the target to be aliased and folded into the Doppler span, , which may be referred to as Doppler ambiguity. The aliasing described above may occur if the SRI has a value that does not permit transmission of sensing symbols frequently enough. This phenomena may be considered as equivalent to violation of the Nyquist sampling criterion in the Doppler frequency domain, which may lead to aliasing. Therefore, a target having Doppler frequency greater than $0.5/T_{SRI}$ may lead to Doppler ambiguity as well as range migration.

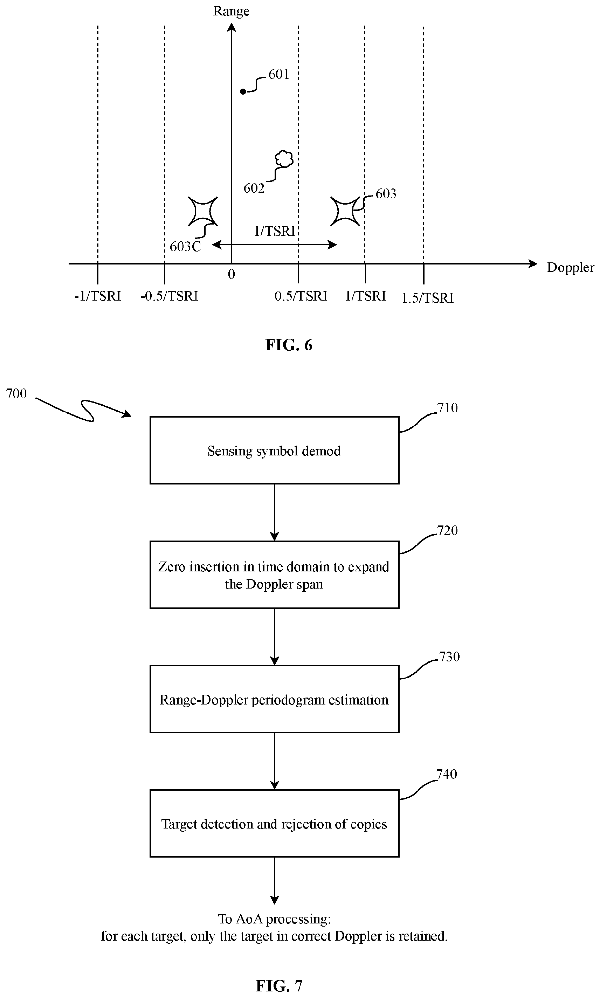

Fig. 6 shows an example of a 2D representation of a range-Doppler spectrum and shows an ambiguous target image 603, along with target images 601 and 602. With reference to Fig. 4, target image 601 may denote a first target image without range migration (e.g. target image 301), and target image 602 may denote a second target image with range migration (e.g. target image 302). As mentioned, targets images 601 and 602 are unambiguous targets due to having actual Doppler frequency within the Doppler span. On the other hand, target image 603 may denote a third target whose actual Doppler frequency exceeds the Doppler span (i.e. $0.5/T_{SRI}$). Therefore, target 603 may be an ambiguous target with range migration. A designated sensing system (e.g. a radar system) may be needed to mitigate the issues caused by both occasions (i.e. range migration and Doppler ambiguity.)

Noting that in the conventional sensing receiver processing, the 2D range-Doppler spectrum is configured to cover the Doppler span (i.e. frequency interval between $-0.5/T_{SRI}$ and $+0.5/T_{SRI}$), as the target image 603 may alias back to cause a further target image 603C., This phenomena may be referred to as Doppler ambiguity.

A sensing system may be designed in such a way that Doppler ambiguity may be avoided. For example, the sensing system may transmit sensing symbols in time domain in a frequent manner to cause the ranks of Doppler dimension to get closer. There are also examples regarding known solutions to overcome Doppler ambiguity. One of those solutions proposes zero insertion in between the sensing symbol repetitions prior to obtaining the range-Doppler periodogram. Such an approach may resolve the Doppler ambiguity at the sensing receiver as zero insertion causes an artificial decrease of $T_{SRI}$ (i.e. artificially increasing the number of sensing symbols within a sensing frame). Inserting zeros may be a helpful technique to detect a target at its correct Doppler. However, zero insertion, in exchange, may create copy images at different ambiguity regions. That is, each target may end up with having a number of images in a variety of ambiguity regions.

Fig.7 depicts a flowchart of a process 700 including a scheme with zero-padding (i.e. zero insertion) technique to resolve the issue of Doppler ambiguity, which the processor 301 may implement. Theprocess 700 may be initiated with demodulating sensing symbol at block 710. At block 720 zero-padding may be performed in an effort to expand the Doppler span (by artifically decreasing $T_{SRI}$). Upon zero-padding (i.e. zero-insertion), 2D range-Doppler periodogram estimation may be implemented at block 730. Having obtained the range-Doppler periodogram, the process 700 may be completed by target detection and rejection of copies at block 740. Rejecting copies may be associated with the purpose of AoA processing in which only the target with correct Doppler is retained (while the copies are to be declined).

The process 700 requires an implementation of zero padding (at block 720) so that the range-Doppler Periodogram (at block 730) can be calculated with expanded Doppler axis. As a result of leveraging this algorithm to avoid Doppler ambiguity, computational intensity of processes such as Doppler FFT, inv-KT, sum amplitude periodogram estimate, and CFAR may be increased proportionally to the expansion factor. Furthermore, since zero-padding is utilized, the output of range-Doppler periodogram estimation may reveal repeated copies across the Doppler dimension for each target.

The number of inserted zeros between two consecutive sensing symbols in the process 700 may depend on the number of times the Doppler spectrum is folded back due to aliasing originating from Doppler ambiguity (i.e. ambiguity factor). Nevertheless, such an approach, when embraced, is likely to lead to a computationally complex process since the Doppler FFT size scales with the ambiguity factor. Therefore, process 700 may be linked to a trade-off between the zero-padding factor (to increase the convergence rate of the algorithm) and the computational complexity. In other words, the zero-padding factor (i.e. the number of inserted zeros) may improve the interpolation accuracy (i.e. convergence rate) on the one hand, yet it may also increase computing time on the other, since zero-padding increases the number of slow frequency points.

Various aspects disclosed herein may relate to mitigating issues caused by range migration and Doppler ambiguity. It may be possible to interrelate range migration and Doppler ambiguity as well as the problems presented by both phenomena may call potential interrelated solutions regarding those problems. process 700 addresses both range migration and Doppler ambiguity in exchange for a high computational cost. Therefore, a device and a related method may be provided to resolve efficiently the issue of Doppler ambiguity and range migration with considerably lower computational complexity, without compromising the performance compared to the process 700. The device herein may refer to an apparatus including processing means (e.g. one or more processors) and a storage (e.g. a memory) coupled to the processing means.

In an aspect, the disclosure aims to provide means to address range migration and Doppler ambiguity with a low computational cost by selectively processing the range-Doppler spectrum only around a detected target in the potentially aliased part of the Doppler spectrum. From the system perspective, such selective processing may prevent the system from continuously expanding the Doppler span such that the range-Doppler periodogram is expanded to an entirely uninterrupted range-Doppler spectrum. This may also relate to applying techniques (e.g. inv-KT) to compensate range mitigation on the expanded range-Doppler spectrum. As a result, such an approach increases the computational cost significantly.

In accordance with various aspects provided herein, the processor 301 may perform operations referred to as a range-Doppler processing herein. The range-Doppler processing may include that the processor 301 may obtain a range-Doppler periodogram of received sensing signals. As described herein, the range-Doppler periodogram may include information representing one or more targets, which may be identifiable through values of the range-Doppler periodogram corresponding to range-Doppler pairs. The one or more targets may be one or more targets identified based on processing of the received sensing signals. The processor 301 may identify the one or more targets (e.g. target images) by processing the range-Doppler periodogram. As illustrated in Figs. 4 or 6, the range-Doppler periodogram may represent one or more targets (301, 302 or 601, 602, 603C) identified within the Doppler span (i.e.. between $-0.5/T_{SRI}$, and $0.5/T_{SRI}$).

For this purpose, the processor 301 may obtain the range-Doppler periodogram of the received signals by processing the received sensing signals within the Doppler span, illustrativey by obtaining estimate signal power values only for the interval corresponding to the Doppler span. This processing may be referred to as first processing or initial processing. In some examples, the processor 301 may identify the one or more targets by performing object identification only within the Doppler span.

As described herein, one of the one or more targets may have been aliased back into the Doppler span due to aliasing associated with the Doppler ambiguity. In order to find actual range-Doppler coordinate of an aliased target, the range-Doppler processing may include that the processor 301 may estimate a range-Doppler coordinate outisde the Doppler span for one of the one or more targets. In some examples, the processor 301 may estimate respective range-Doppler coordinates for each target of the one or more targets. In some examples, the processor 301 may estimate only one or some of the one or more targets. An estimation of a range-Doppler coordinate outside the Doppler span may include shifting the Doppler frequency corresponding to a target with $1/T_{SRI}$ (i.e. adding and/or subtracting $1/T_{SRI}$ to the Doppler frequency of the target).

The shifted Doppler frequency (i.e. estimated range-Doppler coordinate outside the Doppler span as described above) may represent a potential actual range-Doppler coordinate of an aliased target. Correspondingly, the range-Doppler processing may include that the processor 301 may selectively process the range-Doppler spectrum of the received signals for the range-Doppler coordinate. This may be referred to as a second processing. Illustratively, the first processing performed with the Doppler span does not include a processing of the range Doppler coordinate or within a predefined vicinity (e.g. a designated range interval centering the range coordinate of the estimated range-Doppler coordinate and/or a designated Doppler interval outside the Doppler span centering the Doppler coordinate of the estimated range-Doppler coordinate). Illustratively, the designated range interval may be smaller than the entire range span (e.g. FFT length). The designated Doppler interval may be smaller than the Doppler span (i.e. smaller than an interval of $1/T_{SRI}$). Correspondingly, the processor 301 may use the outcome of the second processing in Angle of arrival processing.

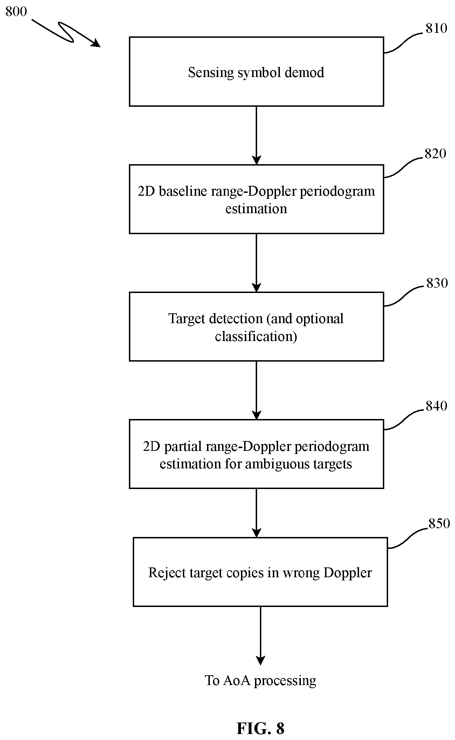

Fig. 8 shows an example of a flowchart to perform the range-Doppler processing as described above. A processor (e.g. the processor 301) may perform aspects described for the flowchart 800. It is to be noted that the processor 301 may perform only one block or a combination of described blocks, or all blocks as described herein. In other words, some of the blocks or some aspects provided for some blocks may be optional. At block 810, the processor 301 may perform sensing symbol demodulation similar to the process 700.

At block 820, the processor 301 may obtain a range-Doppler periodogram of received sensing signals. For this purpose, the processor 301 mayperform a 2D baseline range-Doppler periodogram estimation. The term "baseline" herein may refer to a periodogram that does not go beyond the Doppler span in the Doppler domain (i.e. $[-0.5/T_{SRI}, 0.5/T_{SRI}]$.

Illustratively, the processor 301 may obtain two-dimensional information, such as a matrix, representing received sensing signals, illustratively where, for example, each column may represent a respective pulse (i.e. slow-time dimension) and each row may represent a range bin (i.e. fast-time dimension). The processor 301 may perform range processing on each pulse to obtain range information. Further, the processor 301 may determine the Doppler span based on the $T_{SRI}$ and calculate corresponding Doppler bin indices for the desired Doppler span based on the FFT length. The processor 301 may accordingly perform Doppler processing along the slow-time dimension (i.e. across pulses) only processing the Doppler bins with calculated indices for the desired Doppler span to obtain Doppler information only within the Doppler span.

It is to be noted that as the obtaining of the range-Doppler periodogram described at block 820 is in a manner that the range-Doppler periodogram does not go beyond the Doppler span that is defined by the $T_{SRI}$, in some examples, the processor 301 may determine to increase the $T_{SRI}$ to reduce sensing resources overhead and respective processing overhead associated with the reduced sensing resources. It is further to be noted that the increase of the $T_{SRI}$ may result in increased Doppler ambiguity, yet through implementation of the aspects described herein, while the sensing resources overhead and the respective processing overhead associated with the sensing resources may be reduced, the delibarete introduction of the Doppler ambiguity may allow the range-Doppler processing performed by the processor 301 as described herein.

Illustratively, Doppler ambiguity may be interlinked to an ambiguity factor that refers to a relationship between maximum Doppler frequency of a target and the maximum point of the Doppler span (i.e. $0.5/T_{SRI}$ for the Doppler span). Correspondingly, the ambiguity factor may be defined as below:

$$AmbiguityFactor = ceil\{|2 \times maxTargetDoppler| \times T_{SRI}\} - 1$$

In an example, *maxTargetDoppler* may be within the Doppler span (i.e. [$-0.5/T_{SRI}$, $0.5/T_{SRI}$). In such a case, *AmbiguityFactor* would be equal to zero, indicating no Doppler ambiguity for the target (i.e. the target is potentially unambiguous). In another case, *maxTargetDoppler* may exceed the maximum point of the Doppler span $0.5/T_{SRI}$. For instance, *maxTargetDoppler* may be $1/T_{SRI}$. In that case, *AmbiguityFactor* would be equal to 1 according to the given formula, indicating Doppler ambiguity for the target (i.e. the target is potentially ambiguous). As described above, targets having *maxTargetDoppler* beyond the Doppler span (i.e. $0.5/T_{SRI}$) may alias and fold into the 2D baseline range-Doppler periodogram, causing Doppler ambiguity.

The process may allow increasing SRI, and hence $T_{SRI}$, in order to reduce sensing resources overhead. Additionally, increasing $T_{SRI}$ may be associated with reducing the number of sensing symbols within a sensing frame. As an outcome of this approach, the number of bins in the Doppler dimension (i.e. Doppler bins) may be reduced and Doppler iFFT size may be shrunk. Therefore, the computational intensity to calculate the 2D baseline range-Doppler periodogram at block 820 may be diminished (e.g. due to relaxing $0.5/T_{SRI}$).

In some examples, the processor 301 may, in addition or as alternative to the 2D baseline range-Doppler periodogram estimation as described, perform inv-KT at block 820 to mitigate range migration. In an example, estimating the 2D baseline range-Doppler periodogram and performing inv-KT may be implemented prior to the application of the target detection at block 830. In such an example, the processor 301 may carry out both processes before performing target detection block 830.

Still referring to block 820, as the processor 301 performs operations such that all targets are identifiable within the Doppler span. In some examples, the processor 301 may obtain the range-Doppler periodogram as described herein and all targets may be identifiable within the Doppler span. In some examples, the processor 301 may control the $T_{SRI}$ value of the sensing operation before receiving the sensing signals as described above deliberately to introduce ambiguity deliberatly for all targets. Illustratively, the processor 301 may set the $T_{SRI}$ value to reduce sensing signal and processing overhead, which may introduce ambiguity (i.e. increase ambiguity factor for the targets). In some examples, the processor 301 may based on a previous sensing operation determine to increase the $T_{SRI}$ value. In some examples, the processor 301 may perform the inv-KT to cause that all targets may be detected within the Doppler span (i.e. all targets may appear within the Doppler span). Targets having *maxTargetDoppler* within the Doppler span (e.g. Ambiguity factor = 0) may manifest with their correct Doppler, while the targets having *maxTargetDoppler* beyond the Doppler span (e.g. Ambiguity factor > 0) may alias to fold into the Doppler span, indicating Doppler ambiguity.

At block 830, the processor 301 may perform a target detection. The processor 301 may, at block 830, analyze the obtained range-Doppler periodogram to identify one or more targets. The processor 301 may perform any known methods to identify the one or more targets from two-dimensional information representing the received sensing signals. Illustratively, the processor 301 may perform peak detection on the obtained range-Doppler periodogram (e.g. the 2D baseline range-Doppler periodogram) to detect peaks that may represent the one or more targets. The processor 301 may accordingly determine a range-Doppler coordinate for each one or more target representing the range information and Doppler information of the corresponding target.

Once the one or more targets are identified, the processor 301 may perform some of the operations described in the following blocks differently. In some examples, the processor 301 may apply for all targets of the one more targets. In other words, the processor 301 may identify a plurality of targets and the processor 301 may perform some of further operations (e.g. block 840) for each target of the plurality of targets. In some examples, the processor 301 may select only potentially Doppler ambiguous targets to perform a selective computation aiming to process range-Doppler spectrum to estimate the correct Doppler for (only) potentially ambiguous targets.

For example, the processor 301 may classify each target of the plurality of targets either as an ambiguous target (e.g. potentially ambiguous target) or an unambiguous target (potentially unambiguous target). The processor 301 may determine that a target is potentially ambiguous based on the characteristics of of the target manifesting within baseline range-Doppler periodogram. In some examples, the processor 301 may perform a target classification to further reinforce the inference from target detection phase that the detected target is potentially ambiguous (or not). Such classification may include the use of known techniques of pattern recognition, image processing, machine learning, deep learning, reinforcement learning, artificial neural networks (ANN), convolutional neural networks (CNN) or any other suitable technique that can be used to perform a target classification based on the obtained range-Doppler periodogram..

At block 840, the processor 301 may estimate a partial range-Doppler periodogram for the one or more targets identified in the obtained range-Doppler periodogram. As described herein, the obtained range-doopler periodogram may include the one or more targets within the Doppler span and at this stage due to the baseline operation. Correspondingly, actual objects detected with the sensing operation are expected to cause respective targets to be located in the obtained range-Doppler periodogram within the Doppler span. Yet, while some of these targets may be actual representation of detected objects within the Doppler span in the respective range-Doppler coordinates, some of these targets may be caused because of aliasing and may have fallen within the Doppler span due to the aliasing. The processor 301 may estimate a range-Doppler coordinate for at least one target of the one or more targets, such that the estimated range-Doppler coordinate is outside the Doppler span and different from identified range-Doppler coordinate of the at least one target of the one or more target.

In some examples, the processor 301 may estimate respective range-Doppler coordinates at block 840 for each target of the one or more targets (e.g. the plurality of targets). In some exampels, the processor 301 may estimate respective range-Doppler coordinates only for targets that are classified as potentially ambiguous targets. To estimate a respective range-Doppler coordinate, the processor 301 may shift the Doppler value of the range-Doppler coordinate of the identified target (i.e. previously determined range-Doppler coordinate at block 830) in Doppler dimension by $1/T_{SRI}$. The processor 301 may shift the Doppler value in one or both (i.e. positive or negative) directions.

**In** some aspects, estimation of a respective partial range-Doppler periodogram may relate to the processing of range-Doppler spectrum. In an example, the processor 301 may estimate a range-Doppler coordinate that may actually represent an estimation for correct Doppler for a potentially ambiguous target detected within the baseline range-Doppler periodogram, which has been aliased back to the determined range-Doppler coordinate.

For each esimated range-Doppler coordinate for a respective target (e.g. either for all targets of the one or more targets or for only potentially ambiguous targets of the one or more targets), the processor 301 may selectively process the range-Doppler spectrum of the received sensing signals. The selectively processing may refer to a processing such that only a small portion of the range-Doppler spectrum corresponding to the estimated ranged-Doppler coordindate. Considering the two dimensional range-Doppler spectrum, the processor 301 may only process the range Doppler spectrum within a predefined vicinity around the estimated range-Doppler coordinate. The vicinity may be defined within a predefined range interval that is smaller than the range span (i.e. entire range, e.g. FFT length) of the obtained range-Doppler periodogram. The vicinity may further be defined within a predefined Doppler interval that may be smaller than the Doppler span. In other words, the range-Doppler processing may include processing for the estimated range-Doppler coordinate within a range interval smaller than the range span.

Illustratively, for each estimated range-Doppler coordinate, the processor 301 may obtain two-dimensional information, such as a matrix, representing received sensing signals, illustratively where, for example, each column may represent a respective pulse (i.e. slow-time dimension) and each row may represent a range bin (i.e. fast-time dimension). The processor 301 may perform range processing on each pulse to obtain range information. Further, the processor 301 may determine the Doppler interval based on the estimated range-Doppler coordinate to be processed and calculate corresponding Doppler bin indices for the Doppler interval (that is outside of the Doppler span and smaller than the Doppler span) based on the FFT length. The processor 301 may accordingly perform Doppler processing along the slow-time dimension (i.e. across pulses) only processing the Doppler bins with calculated indices for the Doppler interval to obtain Doppler information for the respective target.

Additionally or alternatively, the processor 301 may, for each estimated range-Doppler coordinate, perform the range processing after the Doppler processing. For example, the processor 301 may determine Doppler bins to be processed based on the Doppler interval. Illustratively, the processor 301 may calculate corresponding Doppler bin indices based on the predefined interval and the estimated range-Doppler coordinate. The processor 301 may perform a Doppler FFT to obtain the corresponding Doppler bins. The processor 301 may apply an inv-KT for the corresponding Doppler bins within a processing range interval. The processsing range interval may be the entire range span in some examples, or the range interval described above. The processor 301 may then calculate a fast range IFFT for the corresponding Doppler bins to complete the partial processing for the respective range-Doppler coordinate.

Additionally, or alternatively, based on the estimated range-Doppler coordinate, the processor 301 may process the range-Doppler spectrum with Doppler interval smaller than the Doppler span to obtain the respective partial range-Doppler periodogram to represent an estimated Doppler of the ambiguous target based on the estimated range-Doppler coordinate. The Doppler interval may include a number of Doppler bins covering an interval in Doppler dimension. In some aspects, the interval covered by the Doppler bins is smaller in comparison to the coverage interval of the Doppler span (i.e. $[-0.5/T_{SRI}, 0.5/T_{SRI})$).

In some examples, the range-Doppler coordinate may represent a coordinate with respective range and Doppler values extended from the Doppler span. That is, estimated range-Doppler coordinate for a detected target may not be within the Doppler span (i.e. $[-0.5/T_{SRI}, 0.5/T_{SRI})$). In such an example, estimated Doppler frequency of the detected target may be outside of the Doppler span, and the detected target may be ambiguous.

The processor 301 may estimate the respective partial range-Doppler periodogram with a range interval based on the range-Doppler coordinate. The range covered within the partial range-Doppler periodogram may be smaller than the range interval covered by the baseline range-Doppler periodogram. In that sense, range span estimated within the partial range-Doppler periodogram may include a smaller number of range bins compared to the range interval of the baseline range-Doppler periodogram. In some aspects, estimating partial range-Doppler periodogram may be combined with inv-KT. In an example, the processor 301 may compute the Doppler spectrum that includes Doppler frequencies beyond the Doppler span. Further, the processor 301 may perform inv-KT to facilitate the one or more targets being moved into the Doppler span to identify potentially ambiguous targets within the baseline range-Doppler periodogram. That approach may improve the accuracy of inv-KT with a smaller computational cost by eliminating the impacts originating from interpolation errors when compared to conventionally used technique.

At this stage, in view of the obtained range-Doppler periodogram, one or more targets may be associated with more than one (i.e. two or three) different range-Doppler coordinates. Illustratively, for the case in which respective estimated range-Doppler coordinates are determined for all targets of the one or more targets, all targets may be associated with more than one different range-Doppler coordinates. For the case in which the one or more targets are classified, only potentially ambiguous targets may be associated with more than one different range-Doppler coordinates. Namely, such a target may be associated with first range-Doppler coordinates that are obtained through target detection, which has respective Doppler coordinate within the Doppler span, and other one or more range-Doppler coordinates, which have respective Doppler coordinates outside the Doppler span. These associations may be considered target image copies (i.e. a copy at the first range-Doppler coordinate and one or more further copies at the one or more range-Doppler coordinates respectively) and the processor 301 may perform block 850 to select one of the target image copies.

At block 850, the processor 301 may, for each target for which a respective range-Doppler coordinate has been estimated, select one of the target image copies as the actual target image (i.e. represents actual range and Doppler information via respective range-Doppler coordinates). The processor 301 may perform rejecting of target image copies, for each target of the one or more targets, based on the obtained range-Doppler periodogram at block 820 and one or more partial range-Doppler peridograms obtained at block 840 for one or more estimated range-Doppler coordinates of the respective target. The processor 301 may select one of the target image copies as the actual target image based on a comparision result that is based on the obtained range-Doppler periodogram within the Doppler span and one or more partial range-Doppler periodograms outside the Doppler span. It is to be noted that target image copies herein may relate to aliased copies of the ambiguous target. Correspondingly, with this selection, the processor 301 may provide only the targets with actual Doppler information to perform a further processing, such as angle of arrival (AoA) processing.

In accordance with various aspects disclosed herein, a $T_{SRI}$ value may be set for a sensing system to ensure that ambiguous targets are also range-migrated targets. In other words, a set $T_{SRI}$ may cause all ambiguous targets to undergo range migration as well. In such an approach, referring back to block 820, potentially ambiguous targets may be detected in a form even more smeared and/or blurred within the baseline range-Doppler periodogram than other targets (e.g. potentially unambiguous targets with or without range migration) when Keystone is also implemented at block 820. In that sense, causing the ambiguous targets to undergo range migration may enhance the process of identifying potentially unambiguous targets (e.g. with range migration). Therefore, using set $T_{SRI}$ in a sensing system may improve the identification of targets in terms of whether the detected targets are potentially ambiguous or not.

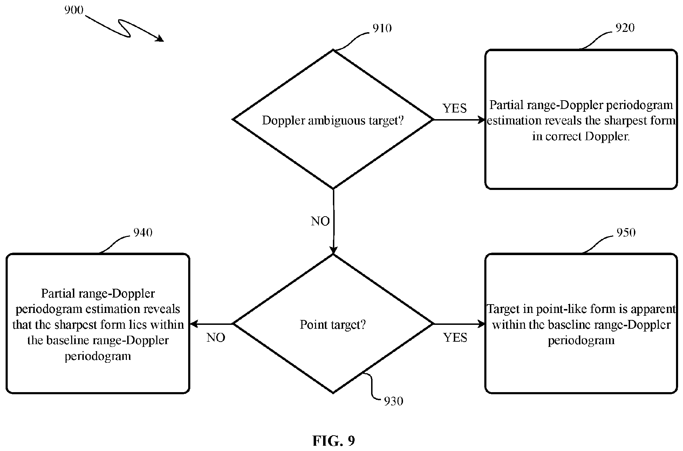

Fig. 9 shows an example of a determination logic to perform a portion of the range-Doppler processing. A processor (e.g. the processor 301) may perform aspects described for the logic 900. Illustratively, the processor 301 may perform only one block or a combination of described blocks, or all blocks as described herein as block 850 described in accordance with Fig. 8. The processor 301 may obtain the range-Doppler peridogram as described herein (e.g. at block 820). The processor 301 may further obtain partial range-Doppler periodograms for each target of one or more targets or for each target of one or more targets that is classified as a potentially ambiguous target. At this stage, the processor 301 may have identified target image copies as described in accordance with block 840. The processor 301 may perform these operations for each identified target.

At block 910, the processor 301 may determine whether an identified target within the obtained range-Doppler periodogram (e.g. block 820, the baseline range-Doppler periodogram) is a Doppler ambiguous target or not. The processor 301 may identify all target image copies for the respective identified target (i.e. identified within the obtained range-Doppler periodogram at block 820) and select one of the target image copies as the actual target image based on a comparision result. The processor 301 may obtain the comparision result by comparing the obtained range-Doppler periodogram within the Doppler span and one or more partial range-Doppler periodograms outside the Doppler span.

The processor 301 may determine whether an identified target within the obtained range-Doppler peridogram based on a metric that represents a measured range migration effect (i.e. sharpness of the target). Illustratively, the processor 301 may determine metrics, each representing a respective sharpness of a respective target image copy of the target image copies identified for the target. Illustratively, the processor 301 may determine a first metric for the identified target at the determined range-Doppler coordinate within the Doppler span by processing a predefined vicinity of the determined range-Doppler coordinate. The processor 301 may determine one or more further metrics, each for one of the target image copies at the one or more estimated range-Doppler coordinates. Illustratively, the processor 301 may determine the one or more further metrics based on the partial range-Doppler periodograms obtained at the respective one or more estimated range-Doppler coordinates. The processor 301 may select the target image copy that is the sharpest among all target copies.

In some examples, as illustrated in block 920, the processor 301 may determine that the sharpest target image among all target copies is a corresponding target image at the estimated range-Doppler coordinate outside of the Doppler span based on the obtained partial range-Doppler periodogram. In other words the partial range-Doppler periodogram obtained for the estimated range-Doppler coordinate may reveal the sharpest form of the target image copies. The partial range-Doppler periodogram may include Doppler extending beyond the Doppler span. Correspondingly, the processor 301 may determine, for the identified target, the range information and the Doppler information the estimated range-Doppler coordinate (i.e. the range information is the range component and the Doppler information is the Doppler component of the estimated range-Doppler coordinate).

In some examples, as illustrated in block 930, the processor 301 may determine whether the identified target is a sharp target or a point target. For example, the processor 301 may determine whether the identified target is a sharp target after the termination of block 910 indicates that the identified target is not an ambiguous target. For example, the processor 301 may determine whether the identified target has point-shape form. In some aspects, there may be received sensing signals invoking a composite target. Such composite targets may also manifest as smeared within the baseline range-Doppler periodogram although having an actual Doppler frequency (i.e. correct Doppler) within the Doppler span (i.e. unambiguous target within the baseline range-Doppler periodogram). In such a case, the processor 301 may determine that the detected composite target does not have point-shape form and assume that the composite target is Doppler ambiguous.

For example, the processor 301 may determine whether the identified target within the Doppler span is a point target based on its relative sharpness compared to other target image copies of the target. The processor 301 may, as illustrated in block 940, determine whether an identified target within the obtained range-Doppler peridogram based on a metric that represents a measured range migration effect (i.e. sharpness of the target). Illustratively, the processor 301 may determine metrics, each representing a respective sharpness of a respective target image copy of the target image copies identified for the target. Illustratively, the processor 301 may determine a first metric for the identified target at the determined range-Doppler coordinate within the Doppler span by processing a predefined vicinity of the determined range-Doppler coordinate. The processor 301 may determine one or more further metrics, each for one of the target image copies at the one or more estimated range-Doppler coordinates. Illustratively, the processor 301 may determine the one or more further metrics based on the partial range-Doppler periodograms obtained at the respective one or more estimated range-Doppler coordinates. The processor 301 may select the target image copy that is the sharpest among all target copies. Illustratively, the processor 301 may compare the metrics and determine that the sharpest form among all the target image copies lies within the obtained range-Doppler periodogram. Correspondingly, the processor 301 may determine, for the identified target, the range information and the Doppler information the determined range-Doppler coordinate within the Doppler span (i.e. the range information is the range component and the Doppler information is the Doppler component of the estimated range-Doppler coordinate).

Additionally, or alternatively, at block 950, the processor may determine that the identified target is apparent in the point-shape form within the obtained range-Doppler periodogram, representing that the target is unambiguous. Illustratively, the processor 301 may calculate a metric representing the sharpness of the identified target within the Doppler span and if the metric is above a predefined threshold, the processor 301 may determine, for the identified target, the range information and the Doppler information the determined range-Doppler coordinate (i.e. the range information is the range component and the Doppler information is the Doppler component of the estimated range-Doppler coordinate). In some examples, the processor may not take further action (e.g. coordinate estimation, partial range Doppler periodogram estimation, etc.) as the target is associated with being unambiguous and having a point-shape form. In that case, the target may proceed to a further block not shown (e.g. AoA processing).

As denoted, a solution may be provided for effectively mitigating range migration and Doppler ambiguity in accordance with various aspects disclosed herein. Referring back to Fig. 8, the processor 301 may perform either target classification as an optional additional process to the target detection stage at block 830, or the flow diagram 800 may be kept on without performing target classification (i.e. performing only target detection at block 830). In both cases, range migration and Doppler ambiguity may be resolved for a small number of targets per beam for a sensing system with a lower computational complexity compared to process 700 leveraging zero-padding. Further, a small number of targets per beam may be a typical context for a sensing system (e.g. cellular radar systems) with transmit beamforming applied.

In accordance with various aspects disclosed herein, the processor 301 may selectively process the range-Doppler spectrum for both cases in which target classification is performed and not performed. In some cases, the processor 301 may perform target classification. In such a case, baseline range-Doppler periodogram estimation at block 810 may be accompanied by inv-KT applied for compensating range migration. The processor 301 may detect targets within the baseline range-Doppler periodogram at block 830 and additionally classifies those targets as ambiguous and unambiguous. In some aspects, target classification may be based on any known technique including pattern recognition, machine learning, deep learning, reinforcement learning, or any known statistical and/or digital method that could be used in classification.

The processor 301 may estimate a range-Doppler coordinate for the detected ambiguous targets. The range-Doppler coordinate may represent an estimate for actual Doppler of the ambiguous target. In some aspects, the range-Doppler coordinate may represent a Doppler beyond the Doppler span. The processor 301 may selectively process the range-Doppler spectrum and estimate for detected ambiguous targets a partial range-Doppler periodogram outside of the baseline range-Doppler periodogram at block 840 based on the corresponding range-Doppler coordinate. Upon estimating the actual Doppler for ambiguous targets, the processor 301 may retain the target with the actual Doppler, while rejecting aliased copies within the Doppler span (e.g. copies within the baseline range-Doppler periodogram). The target associated with the correct Doppler may proceed to a further processing step (e.g. AoA processing). Notably, implementing inv-KT at block 820 may cause the ambiguous targets to manifest more smeared, assisting the target classification process.

In some cases, the processor 301 may not perform target classification. Therefore, implementation of inv-KT may be redundant and omitted at block 810 since the processor 301 may estimate a range-Doppler coordinate for all detected targets within the baseline range-Doppler periodogram without classifying them as ambiguous or unambiguous. In such a case, the processor 301 may selectively process the range-Doppler spectrum and estimate for all detected targets a partial range-Doppler periodogram outside of the baseline range-Doppler periodogram at block 840 based on the corresponding range-Doppler coordinate. Estimating partial range-Doppler periodogram may be accompanied by performing inv-KT.

Therefore, implementing target classification may not affect certain aspects of the process carried out. In particular, selectively processing the range-Doppler spectrum may be performed regardless whether the target classification is implemented or not. A difference between those approaches may be associated with the stages in which inv-KT is applied. Another difference may relate to performing classification on the detected targets within the baseline range-Doppler periodogram. On the one hand, if the target classification is performed, range-Doppler coordinate estimation may be performed for only ambiguous targets, and therefore selectively processing the range-Doppler spectrum may be attributed to only ambiguous targets. On the other hand, if the target classification is omitted, range-Doppler coordinate estimation may be performed for all detected targets, and therefore selectively processing the range-Doppler spectrum may be attributed to all detected targets. However, due to selective processing of the range-Doppler spectrum embraced by both approaches, computational complexity may be considerably reduced compared to process 700.

In accordance with various aspects disclosed herein, the partial range-Doppler periodogram estimation may refer to or include a set of sub-processes. In some examples, estimating the partial range-Doppler periodogram may require the processor 301 to determine Doppler bins of the range-Doppler spectrum to be processed based on the estimated range-Doppler coordinate. Doppler bins in this context may refer to a number of Doppler bins that is smaller than the number of Doppler bins covered within the Doppler span (i.e. $[-0.5/T_{SRI}, 0.5/T_{SRI})$). In some aspects, determining the Doppler bins in a smaller number as exemplified may facilitate the computation process and reduce the complexity.

Referring back to Fig. 5B, estimating baseline range-Doppler periodogram may be attributed to implementing processes depicted in blocks 521, 531, and 541. In particular, the processor 301 may perform a Doppler FFT to received sensing signals at block 521. The received sensing signals may scatter into a plurality of Doppler bins. At block 531, the processor 301 may apply inv-KT for the plurality of Doppler bins across a plurality of range bins of the range span where the plurality of range bins is associated with the range of the received sensing signals. At block 541, the processor 301 may calculate an iFFT for the plurality of Doppler bins to estimate the baseline range-Doppler periodogram.

Although process 700 may follow the identical stages depicted in Fig. 5B, it fails to propose a selective processing of the range-Doppler spectrum. Instead, process 700 employs zero-padding, prior to determining Doppler bins, with a padding factor based on the ambiguity factor. Therefore, process 700 ends up with stepwise expansion of the Doppler span due to zero-insertion at the cost of high computational complexity.

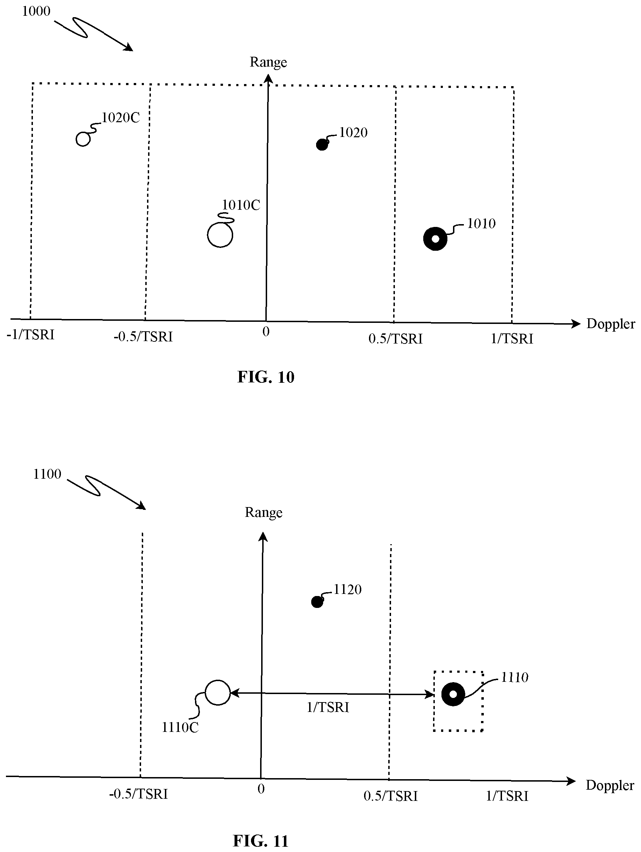

Fig. 10 depicts an uninterrupted range-Doppler spectrum 1000 in accordance with the approach that may be associated with the process 700. In an example, a target with ambiguity factor = 1 may be identified with its correct Doppler by employing the zero-insertion method of process 700. However, upon zero-padding in alignment with the ambiguity factor, the Doppler span undergoes a full expansion in the spectrum to identify the ambiguous target at its correct Doppler. Target 1010 is identified as the ambiguous target that creates a corresponding copy 1010C within the Doppler span due to Doppler ambiguity. Target 1020, on the other hand, is an unambiguous target with a Doppler falling into the Doppler span. Target 1020 causes to emerge a corresponding copy 1020C outside the Doppler span.

Fig. 11 depicts a selectively processed range-Doppler spectrum 1100 in accordance with various aspects of the disclosure. As denoted, based on the estimated range-Doppler coordinate, the processor 301 may selectively process the range-Doppler spectrum and estimate a partial range-Doppler periodogram to identify an ambiguous target at its correct Doppler. The number of Doppler and range bins covered within the partial range-Doppler periodogram may refer to a smaller number of bins covered in both dimensions within the Doppler and range span.

Referring to Fig. 11, target 1110C may be an aliased copy of target 1110 with correct Doppler outside the Doppler span. The processor 301 may detect target copy 1110C within the Doppler span and estimate a range-Doppler coordinate to identify target 1110. The processor 301 may selectively process the range-Doppler spectrum to end up with identifying target 1110 at its actual Doppler within the partial periodogram estimated based on the range-Doppler coordinate. Therefore, range-Doppler coordination estimation as well as the partial range-Doppler periodogram estimation may be introduced without employing zero-padding. Therefore, the processor 301 may process the range-Doppler spectrum selectively based on the range-Doppler coordinate. Such an approach may relax the computational complexity due to not needing to process the spectrum in an uninterrupted fashion.

In accordance with various aspects of the disclosure, target detection may or may not be accompanied by target classification. For cases, the target classification is performed, inv-KT implemented within the baseline range-Doppler periodogram (e.g. at block 810) may be helpful to distinguish and identify ambiguous targets (and for that matter also unambiguous targets).

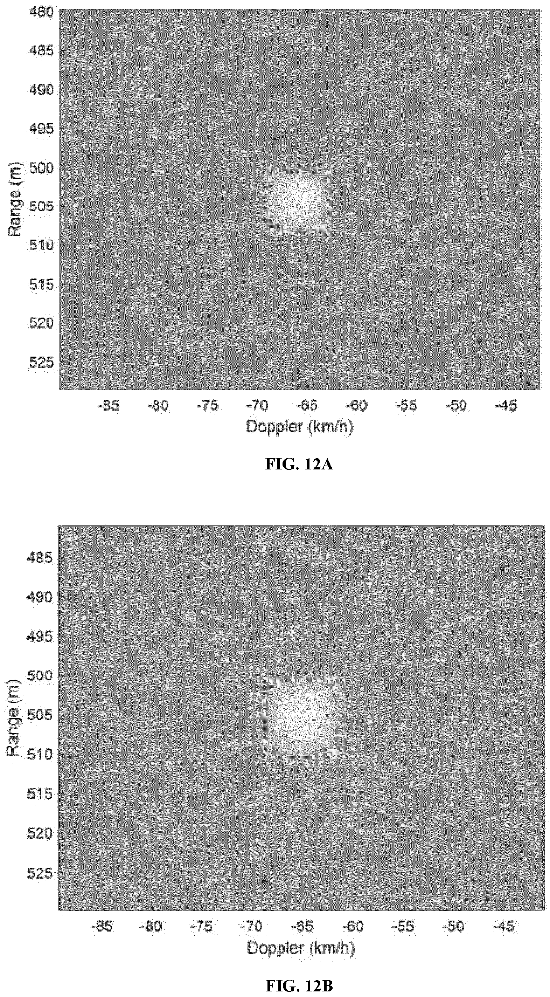

Fig. 12A and Fig. 12B illustrate range-Doppler representations of a Doppler ambiguous target with respect to Doppler information (i.e. range and velocity). Although the inv-KT may be a useful approach to mitigate range migration, it is known to exacerbate the range migration effect of ambiguous targets folded into the Doppler span. That is, if a target is considered to be ambiguous, then implementing inv-KT may cause the appearance of the ambiguous target to be more smeared (e.g. compared to a detected ambiguous target without implementing inv-KT).

Fig. 12A depicts an example of a range-Doppler representation of an ambiguous target in a case where the inv-KT is not implemented. On the contrary, Fig. 12B illustrates another example of a range-Doppler representation of the ambiguous target in a case where the inv-KT is performed. While the representation in Fig. 12A reveals a more compact and sharper appearance, the representation in Fig. 12B presents a more smeared and shallow appearance for the ambiguous target. The reason may be related to slightly different frequencies existing within the bandwidth. That concept may point to the Doppler shift.

In order to mitigate Doppler shift across frequency dimension, a subtle phase correction may be required. Such a correction may be carried out using a frequency dependent resampling (e.g. inv-KT). In an example of a 2D Orthogonal Frequency Division Multiplexing (OFDM) grid, a fractional resampling may be performed in time dimension for each subcarrier. However, such an approach may only be useful if the detected target is unambiguous indicating that the detected target is already at its correct Doppler. On the other hand, if the detected target is ambiguous and therefore not at its correct Doppler, then applying such fractional resampling may worsen the target representation as depicted in Fig. 12B.

In some aspects, Fig. 12A indicating the absence of inv-KT implementation may be associated with the process illustrated in Fig. 5A. Conversely, Fig. 12B where the inv-KT is implemented may relate to the process illustrated in Fig. 5B. Distinguishing between the targets as a classification problem may be solved by taking the representations (e.g. images) of the ambiguous and unambiguous targets into account once inv-KT is applied as shown in Fig. 12B. To carry out classification, process may exemplarily leverage a convolutional neural network frame. Any other suitable techniques may also be legit to distinguish ambiguous targets folded into the Doppler span from the unambiguous ones already reflecting their correct Doppler.

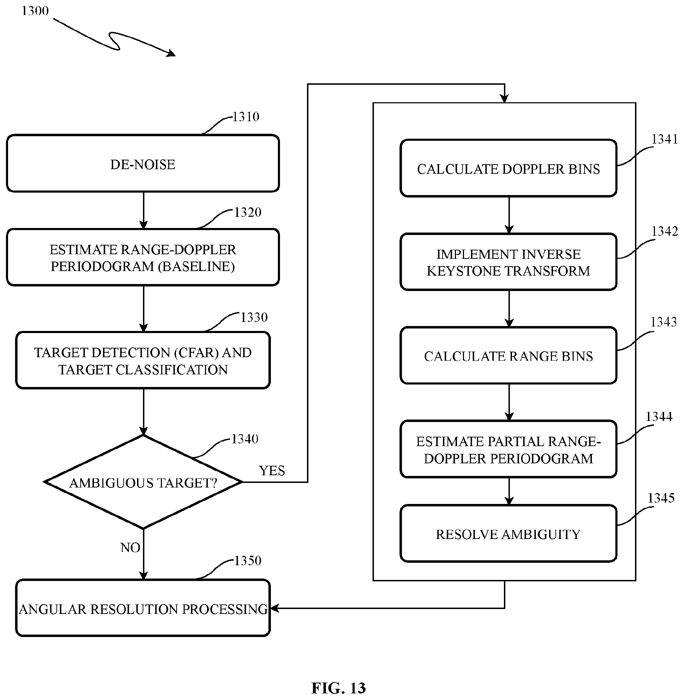

Fig. 13 illustrates a process flow 1300 including target classification sub-process. The processor 301 may implement the process flow 1300. In some aspects, the process flow 1300 may involve similar tasks performed by the processor 301 in flowchart 800. In particular, blocks 810, 820, and 830 may apply the blocks 1310, 1320, and 1330 of the process flow 1300. However, the processor 301 may actually perform target classification in the process flow 1300, which is facultative in the flowchart 800. Therefore, sub-processes after target classification at block 1330 may be exploited to reveal how Doppler ambiguity and range migration are mitigated.

As denoted, when target classification is performed, the processor 301 may estimate respective partial range-Doppler periodograms only for potentially ambiguous targets based on the range-Doppler coordinate estimated for the detected ambiguous targets. By employing such an approach, the processor 301 may identify target image copies for the potentially ambiguous targets at respective estimated range-Doppler coordinates as described herein. At block 1340, the processor 301 may determine whether the identified target within the obtained range-Doppler periodogram in 1320 is an ambiguous target or an unambiguous target. Unambiguous targets may directly proceed for further processing purposes. For example, unambiguous targets may be subject to angular resolution processing at block 1350. Ambiguous targets, on the other hand, may require to walk through further subprocesses.

As denoted, for targets that are potentially ambiguous targets (or for all targets), for the respective estimated range-Doppler coordinate estimated for the respective target, the processor 301 may selectively process the range-Doppler spectrum within a Doppler interval smaller than the Doppler span to obtain the partial range-Doppler periodograms representative of received signal power or signal intensity within a vicinity of the respective estimated range-Doppler coordinates. To achieve this, at block 1341, the processor 301 may calculate Doppler bins in accordance with the estimated range-Doppler coordinate in an effort to estimate the partial range-Doppler periodogram within the vicinity. The interval covered by the Doppler bins in the spectrum may be essential to implement inv-KT. Therefore, the processor 301 may apply a rule-based approach.

In an example, the ambiguous target may manifest within the baseline range-Doppler periodogram such that the apparent Doppler of the ambigous target is $f_0$ and ambiguity factor equals to 1. In such a case, if $f_0 < 0$ (i.e. $f0 = \{[-0.5/T_{SRI}, 0)\}$), then correct Doppler would be at $f_0 + fd$ where $f_d$ represents $1/T_{SRI}$. In that example, the processor 301 may estimate a Doppler coordinate in terms of an interval of Doppler bins as $f_0 + fd + \{-df : fd /N: df\}$, where N is the number of doppler bins in $f_d$ Doppler span. In another example where $f_0 > 0$ (i.e. $f_0 = \{(0, 0.5/T_{SRI}]\}$), then the correct Doppler would be at $f_0 - fd$. In such a case, the processor 301 may estimate a Doppler coordinate in terms of an interval of Doppler bins as $f_0 - fd + \{-df : fd /N : df\}$. In some aspects, output of Doppler FFT implemented to estimate baseline range-Doppler periodogram (at block 521) may be used for the calculated Doppler bins to translate Doppler coefficients for calculated Doppler bins.

At block 1342, the processor 301 may implement inv-KT for Doppler bins within the Doppler interval for all fast frequency bins. In some aspects, implementation of inv-KT may relate to compensating for range migration effects. The processor 301 may further implement range iFFT for calculated Doppler bins and all range bins covered within the range span.

In some aspects, the processor 301 may calculate Doppler bins and implement inv-KT within a single block. In such an approach, the processor 301 may calculate Doppler bins in a simplified manner. In some examples, the processor 301 may calculate Doppler bins on a new frequency grid using the correlation of appropriate exponential vector associated with slow time data sequence. More precisely, conventional technique employed to calculate Doppler bins at frequency points $fd \times [-0.5, -0.5+1/N, ..., 0.5-1/N]$, where N denotes number of Doppler bins. The processor 301 may calculate those Doppler bins efficiently using FFT algorithm. However, such a process may require the processor 301 to implement inv-KT on FFT outputs for completion of the process. Therefore, in some examples, the processor 301 may calculate Doppler bins directly at the extended Doppler direction outside the Doppler span based on the range-Doppler coordination. The points at the extended Doppler direction may be given by $fd \times [-0.5, -0.5+1/N, ..., 0.5-1/N] \times (1 + k_{\mu})$ where k denotes fast frequency index, $\mu$ denotes $\dfrac{\Delta_f}{F_0}$ where $\Delta_f$ and $F_0$ stand for sub-carrier spacing and RF carrier frequency, respectively. Such an approach may prevent the processor 301 from leveraging computationally efficient FFT in order to calculate all Doppler bins. However, since the processor 301 may only calculate Doppler bins at selected Doppler points constituting the Doppler interval, it may not be required to use FFT to calculate all bins.

At block 1343, the processor 301 may alternatively calculate range bins to implement range iFFT, instead of implementing range iFFT for the entire range span. In an example, range of the ambigous target may be approximated at $r_0$ within the baseline range-Doppler periodogram. In such a case, the processor 301 may estimate a range coordinate in terms of a range interval including range bins at $r_0 + \{-r: dR: r\}\}$, where dR is the range bin size.

At block 1344, the processor 301 may estimate a partial range-Doppler periodogram by selectively processing the range-Doppler spectrum based on the processes explained above. Considering the range interval (i.e. calculated range bins) and the Doppler interval (i.e. calculated Doppler bins), the partial range-Doppler periodogram may occupy a rectangular plane with the size of 2r $\times$ *2df* in the range-Doppler spectrum as a result of selectively processing the range-Doppler spectrum in accordance with various aspects of the disclosure. Such an approach may result in significant saving of computational resources as it decreases computational cost, intensity, and complexity.

At block 1345, the processor 301 may resolve ambiguity by rejecting copies at wrong Doppler to retain only the target with correct Doppler, as illustratively described in accordance with block 850 and Fig. 9. Upon ambiguity resolution, target with correct Doppler may proceed for further processing, such as Angular resolution processing as shown at block 1350.

As denoted, various aspects of the disclosure may relate to providing computationally efficient means for target detection in a radar sensing system. In comparison with the known techniques, means and methods disclosed herein may decrease computational cost without compromising target detection accuracy. Table - 1 may present an parametrized example scenario. Accordingly Table - 2 may present processing compute for one sensing signal in accordance with the parameters provided in Table - 1.

Table - 1: Parametrization for an example scenario

| Paramete r | value | Notes |
|---|---|---|
| M | 2048 | Range IFFT size = M |
| N | 512 | Doppler FFT size = N |
| I | 16 | Length of Interpolation filter for Inv KT = I |

(continued)

| Paramete r | value | Notes |
|---|---|---|
| A | 8 | Number of RX antennas A |
| K1 | 2 | Number of targets: K1 unambiguous, and K2 ambiguous targets |
| K2 | 2 | |
| L1 | 3 | Ambiguity factor: L1, where L1=0 means no ambiguity |
| L2 | 1 | Zero padding factor to help Inv KT accuracy L2, L2 = 0 means no zero padding |
| R | 16 | Range width of Ambiguous targets |
| D | 16 | Doppler width of Ambiguous targets |
| N_IFFT1 | 4096 | |
| N_IFFT2 | 1024 | |

Table 2 - Processing compute for one sensing frame, corresponding to parameters of Table 1 (Complexity of FFT of length N is assumed to be N*log2(N))

| Operation | Notes | [3] - parametric | [3] - numeric al | Proposed algo - parametric | Propose d algo - numeric al |
|---|---|---|---|---|---|
| Demod | | M*N | 1048576 | M*N | 1048576 |
| Doppler FFT | Zero inserted and zero padded data Length of IFFT, N_IFFT1 | N_IFFT1= N*(L1+1)*(L2+1), CMUL = N_IFFT1*log2(N_IF FT1) | 1006632 96 | N_IFFT2 = N*(L2+1) CMUL = N_IFFT2*log2(N_IF FT2) | 2097152 0 |
| Inv KT | | I*N_IFFT1*M | 1342177 28 | I*N_IFFT2*M | 3355443 2 |
| Calc average Periodogr am | | M*N_IFFT1*A | 6710886 4 | M*N_IFFT2*A | 1677721 6 |
| Target Det (CFAR) | | | 0 | | 0 |
| Target Clas-sify | overall K1+K2 tar-gets | | NA | (K1+K2) targets check their widths | 0 |
| Calc Range Doppler bins for ambiguou s targets | Each target, we have to calculate (D+I)*R bins | | NA | Worst case all tar-gets appear ambig-uous | 2048 |
| Average Per-iodogr am calc | | | NA | | 16384 |
| Ambiguity resolution | | | 0 | | 0 |
| Total CMUL | | | 3030384 64 | | 7237017 6 |
| Compute Saving (%) | | | | | 76.1184 85 |

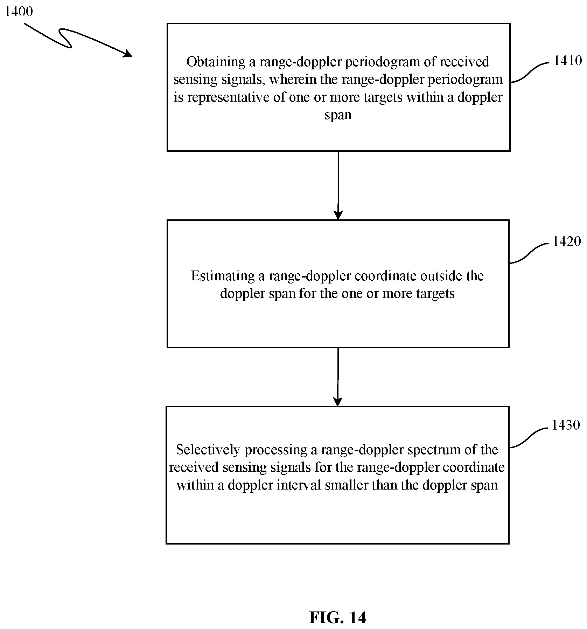

Fig. 14 illustrates a method in accordance with various aspects of the disclosure. The method 1400 includes, at block 1410, obtaining a range-Doppler periodogram of received sensing signals, wherein the range-Doppler periodogram is representative of one or more targets within a Doppler span. The method 1400 may further include estimating 1420 a range-Doppler coordinate outside the Doppler span for the one or more targets. The method 1400 may further include selectively processing 1430 a range-Doppler spectrum of the received sensing signals for the range-Doppler coordinate within a Doppler interval smaller than the Doppler span. A non-transitory computer-readable medium may include instructions which, if executed by a processor perform the method 1400. The method 1400 may further include any other aspects described herein.

The detailed description refers to the accompanying drawings that show, by way of illustration, specific details and aspects of this disclosure in which the disclosure may be practiced. Other aspects may be utilized and structural, logical, and electrical changes may be made without departing from the scope of the disclosure. The various aspects of this disclosure are not necessarily mutually exclusive, as some aspects of this disclosure can be combined with one or more other aspects of this disclosure to form new aspects.

The word "exemplary" is used herein to mean "serving as an example, instance, or illustration". Any aspect of the disclosure or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in a plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

"The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The terms "group (of)", "set (of)", "collection (of)", "series (of)", "sequence (of)", "grouping (of)", etc., and the like in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

As used herein, a signal that is "indicative of" a value or other information may be a digital or analog signal that encodes or otherwise communicates the value or other information in a manner that can be decoded by and/or cause a responsive action in a component receiving the signal. The signal may be stored or buffered in computer readable storage medium prior to its receipt by the receiving component and the receiving component may retrieve the signal from the storage medium. Further, a "value" that is "indicative of" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As utilized herein, terms "module", "component," "system," "circuit," "element," "slice," "circuitry," and the like are intended to refer to a set of one or more electronic components, a computer-related entity, hardware, software (e.g., in execution), and/or firmware. For example, circuitry or a similar term can be a processor, a process running on a processor, a controller, an object, an executable program, a storage device, and/or a computer with a processing device. By way of illustration, an application running on a server and the server can also be circuitry. One or more circuits can reside within the same circuitry, and circuitry can be localized on one computer and/or distributed between two or more computers. A set of elements or a set of other circuits can be described herein, in which the term "set" can be interpreted as "one or more."

The term "antenna" or "antenna structure", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "applied" to an element, the voltage, current, or signal may be conducted to the element by way of a physical connection or by way of capacitive, electro-magnetic, or inductive coupling that does not involve a physical connection.

The following examples pertain to further aspects of this disclosure.

In example 1, the subject matter includes an apparatus including a memory and a processor configured to: obtain a range-Doppler periodogram of received sensing signals, wherein the range-Doppler periodogram is representative of one or more targets within a Doppler span; estimate a range-Doppler coordinate outside the Doppler span for the one or more targets; selectively process a range-Doppler spectrum of the received sensing signals for the range-Doppler coordinate within a Doppler interval smaller than the Doppler span.

In example 2, the subject matter of example 1, wherein a target of the one or more targets represents a first range and Doppler estimate of a detected target of the one or more targets; wherein the range-Doppler coordinate represents a second range and Doppler estimate of the detected target.

In example 3, the subject matter of example 2, wherein the processor is further configured to select, for the detected target, one of the first range and Doppler estimate or the second range and Doppler estimate and use the selected range and Doppler estimate for an angle of arrival processing.

In example 4, the subject matter of any one of examples 1 to 3, wherein the range-Doppler periodogram is representative of the one or more targets within a range span; wherein the range-Doppler spectrum is processed for the range-Doppler coordinate within a range interval smaller than the range span.

In example 5, the subject matter of any one of examples 1 to 4, wherein the processor is further configured to determine Doppler bins of the range-Doppler spectrum based on the range-Doppler coordinate.

In example 6, the subject matter of example 5, wherein the processor is further configured to: obtain an output of a Doppler fast Fourier transform, FFT, of the received sensing signals including a plurality of Doppler bins; apply inverse keystone transform for the determined Doppler bins for a plurality of range bins of the range span; calculate a fast range inverse-FFT, IFFT, for the determined Doppler bins.

In example 7, the subject matter of example 6, wherein the fast range IFFT is calculated over the plurality of range bins of the range span.

In example 8, the subject matter of example 6, wherein the fast range IFFT is calculated only for a subset of the plurality of range bins, wherein the subset is determined based on the range-Doppler coordinate.

In example 9, the subject matter of any one of examples 1 to 8, wherein the processor is further configured to estimate the range-Doppler coordinate outside the Doppler span based on the one or more targets within the Doppler span and a symbol repetition interval of the received sensing signals.

In example 10, the subject matter of any one of examples 1 to 9, wherein the processor is further configured to determine a symbol repetition interval for a sensing operation to introduce a range migration within the range-Doppler spectrum for the received sensing signals.

In example 11, the subject matter of any one of examples 1 to 10, wherein the processor is further configured to calculate the range-Doppler spectrum based on the received sensing signals, in which an inverse keystone transform is applied.

In example 12, the subject matter of any one of examples 1 to 11, wherein the one or more targets include a plurality of targets; wherein the processor is further configured to estimate a respective range-Doppler coordinate outside the Doppler span for each target of the plurality of targets; wherein the processor is further configured to selectively process the range-Doppler spectrum for each respective range-Doppler coordinate.

In example 13, the subject matter of any one of examples 1 to 11, wherein the one or more targets include a plurality of targets; wherein the processor is further configured to classify each target of the plurality of targets as an ambiguous target or an unambiguous target.

In example 14, the subject matter of example 13, wherein the processor is further configured to selectively process the range-Doppler spectrum for each ambiguous target of the plurality of targets.

In example 15, the subject matter of example 13 or example 14, wherein the processor is further configured to estimate a respective range-Doppler coordinate outside the Doppler span for each ambiguous target of the plurality of targets; wherein the processor is further configured to process the range-Doppler spectrum based on the respective range-Doppler coordinate for each ambiguous target.

In example 16, the subject matter of any one of examples 13 to 15, wherein the processor is further configured to classify each target of the plurality of targets based on a respective metric determined for each target, wherein each respective metric represents a measured range migration effect for the respective target.

In example 17, the subject matter of any one of examples 1 to 16, wherein the processor is further configured to determine a comparison result based on an output of the processing of the range-Doppler spectrum for the range-Doppler coordinate and an output of a processing of the range-Doppler spectrum for the one or more targets within the Doppler span; wherein the processor is further configured to determine a velocity of an identified object based on the comparison result.

In example 18, the subject matter includes a non-transitory computer-readable medium including one or more instructions which, if executed by a processor, cause the processor to: obtain a range-Doppler periodogram of received sensing signals, wherein the range-Doppler periodogram is representative of one or more targets within a Doppler span;

estimate a range-Doppler coordinate outside the Doppler span for the one or more targets; selectively process a range-Doppler spectrum of the received sensing signals for the range-Doppler coordinate within a Doppler interval smaller than the Doppler span.

In example 19, the subject matter of example 18, wherein a target of the one or more targets represents a first range and Doppler estimate of a detected target of the one or more targets; wherein the range-Doppler coordinate represents a second range and Doppler estimate of the detected target.

In example 20, the subject matter of example 19, wherein the instructions further cause the processor to select, for the detected target, one of the first range and Doppler estimate or the second range and Doppler estimate and use the selected range and Doppler estimate for an angle of arrival processing.

In example 21, the subject matter of any one of examples 18 to 20, wherein the range-Doppler periodogram is representative of the one or more targets within a range span; wherein the range-Doppler spectrum is processed for the range-Doppler coordinate within a range interval smaller than the range span.

In example 22, the subject matter of any one of examples 18 to 21, wherein the instructions further cause the processor to determine Doppler bins of the range-Doppler spectrum based on the range-Doppler coordinate.

In example 23, the subject matter of example 22, wherein the instructions further cause the processor to: obtain an output of a Doppler fast Fourier transform, FFT, of the received sensing signals including a plurality of Doppler bins; apply inverse keystone transform for the determined Doppler bins for a plurality of range bins of the range span; calculate a fast range inverse-FFT, IFFT, for the determined Doppler bins.

In example 24, the subject matter of example 23, wherein the fast range IFFT is calculated over the plurality of range bins of the range span.

In example 25, the subject matter of example 23, wherein the fast range IFFT is calculated only for a subset of the plurality of range bins, wherein the subset is determined based on the range-Doppler coordinate.

In example 26, the subject matter of any one of examples 18 to 25, wherein the instructions further cause the processor to estimate the range-Doppler coordinate outside the Doppler span based on the one or more targets within the Doppler span and a symbol repetition interval of the received sensing signals.

In example 27, the subject matter of any one of examples 18 to 26, wherein the instructions further cause the processor to determine a symbol repetition interval for a sensing operation to introduce a range migration within the range-Doppler spectrum for the received sensing signals.

In example 28, the subject matter of any one of examples 18 to 27, wherein the instructions further cause the processor to calculate the range-Doppler spectrum based on the received sensing signals, in which an inverse keystone transform is applied.

In example 29, the subject matter of any one of examples 18 to 28, wherein the one or more targets include a plurality of targets; wherein the instructions further cause the processor to estimate a respective range-Doppler coordinate outside the Doppler span for each target of the plurality of targets; wherein the instructions further cause the processor to selectively process the range-Doppler spectrum for each respective range-Doppler coordinate.

In example 30, the subject matter of any one of examples 18 to 28, wherein the one or more targets include a plurality of targets; wherein the instructions further cause the processor to classify each target of the plurality of targets as an ambiguous target or an unambiguous target.

In example 31, the subject matter of example 30, wherein the instructions further cause the processor to selectively process the range-Doppler spectrum for each ambiguous target of the plurality of targets.

In example 32, the subject matter of example 30 or example 31, wherein the instructions further cause the processor to estimate a respective range-Doppler coordinate outside the Doppler span for each ambiguous target of the plurality of targets; wherein the instructions further cause the processor to process the range-Doppler spectrum based on the respective range-Doppler coordinate for each ambiguous target.

In example 33, the subject matter of any one of examples 30 to 32, wherein the instructions further cause the processor to classify each target of the plurality of targets based on a respective metric determined for each target, wherein each respective metric represents a measured range migration effect for the respective target.

In example 34, the subject matter of any one of examples 18 to 33, wherein the instructions further cause the processor to determine a comparison result based on an output of the processing of the range-Doppler spectrum for the range-Doppler coordinate and an output of a processing of the range-Doppler spectrum for the one or more targets within the Doppler span; wherein the instructions further cause the processor to determine a velocity of an identified object based on the comparison result.

In example 35, the subject matter includes a method including: obtaining a range-Doppler periodogram of received sensing signals, wherein the range-Doppler periodogram is representative of one or more targets within a Doppler span; estimating a range-Doppler coordinate outside the Doppler span for the one or more targets; selectively processing a range-Doppler spectrum of the received sensing signals for the range-Doppler coordinate within a Doppler interval smaller than the Doppler span.

In example 36, the subject matter of example 35, wherein a target of the one or more targets represents a first range and Doppler estimate of a detected target of the one or more targets; wherein the range-Doppler coordinate represents a second range and Doppler estimate of the detected target.

In example 37, the subject matter of example 36, may further include: selecting, for the detected target, one of the first range and Doppler estimate or the second range and Doppler estimate and use the selected range and Doppler estimate for an angle of arrival processing.

In example 38, the subject matter of any one of examples 35 to 37, wherein the range-Doppler periodogram is representative of the one or more targets within a range span; wherein the range-Doppler spectrum is processed for the range-Doppler coordinate within a range interval smaller than the range span.

In example 39, the subject matter of any one of examples 35 to 38, may further include: determining Doppler bins of the range-Doppler spectrum based on the range-Doppler coordinate.

In example 40, the subject matter of example 39, may further include: obtaining an output of a Doppler fast Fourier transform, FFT, of the received sensing signals including a plurality of Doppler bins; applying inverse keystone transform for the determined Doppler bins for a plurality of range bins of the range span; calculating a fast range inverse-FFT, IFFT, for the determined Doppler bins.

In example 41, the subject matter of example 40, wherein the fast range IFFT is calculated over the plurality of range bins of the range span.

In example 42, the subject matter of example 40, wherein the fast range IFFT is calculated only for a subset of the plurality of range bins, wherein the subset is determined based on the range-Doppler coordinate.

In example 43, the subject matter of any one of examples 35 to 42, may further include: estimating the range-Doppler coordinate outside the Doppler span based on the one or more targets within the Doppler span and a symbol repetition interval of the received sensing signals.

In example 44, the subject matter of any one of examples 35 to 43, may further include: determining a symbol repetition interval for a sensing operation to introduce a range migration within the range-Doppler spectrum for the received sensing signals.

In example 45, the subject matter of any one of examples 35 to 44, may further include: calculating the range-Doppler spectrum based on the received sensing signals, in which an inverse keystone transform is applied.

In example 46, the subject matter of any one of examples 35 to 45, wherein the one or more targets include a plurality of targets; wherein the method further includes: estimating a respective range-Doppler coordinate outside the Doppler span for each target of the plurality of targets; selectively processing the range-Doppler spectrum for each respective range-Doppler coordinate.

In example 47, the subject matter of any one of examples 35 to 45, wherein the one or more targets include a plurality of targets; wherein the method further includes classifying each target of the plurality of targets as an ambiguous target or an unambiguous target.

In example 48, the subject matter of example 47, may further include: selectively processing the range-Doppler spectrum for each ambiguous target of the plurality of targets.

In example 49, the subject matter of example 47 or example 48, may further include: estimating a respective range-Doppler coordinate outside the Doppler span for each ambiguous target of the plurality of targets; processing the range-Doppler spectrum based on the respective range-Doppler coordinate for each ambiguous target.

In example 50, the subject matter of any one of examples 47 to 49, may further include: classifying each target of the plurality of targets based on a respective metric determined for each target, wherein each respective metric represents a measured range migration effect for the respective target.

In example 51, the subject matter of any one of examples 35 to 50, may further include: determining a comparison result based on an output of the processing of the range-Doppler spectrum for the range-Doppler coordinate and an output of a processing of the range-Doppler spectrum for the one or more targets within the Doppler span; determining a velocity of an identified object based on the comparison result.

**Claims**

1. An apparatus comprising a memory and a processor configured to:

   obtain a range-Doppler periodogram of received sensing signals, wherein the range-Doppler periodogram is representative of one or more targets within a Doppler span;
   estimate a range-Doppler coordinate outside the Doppler span for the one or more targets; and
   selectively process a range-Doppler spectrum of the received sensing signals for the range-Doppler coordinate within a Doppler interval smaller than the Doppler span.

2. The apparatus of claim 1,

wherein a target of the one or more targets represents a first range and Doppler estimate of a detected target of the one or more targets; and

wherein the range-Doppler coordinate represents a second range and Doppler estimate of the detected target; preferably wherein the processor is further configured to select, for the detected target, one of the first range and Doppler estimate or the second range and Doppler estimate and use the selected range and Doppler estimate for an angle of arrival processing.

3.  The apparatus of any one of claims 1 or 2,

    wherein the range-Doppler periodogram is representative of the one or more targets within a range span; and wherein the range-Doppler spectrum is processed for the range-Doppler coordinate within a range interval smaller than the range span.

4.  The apparatus of any one of claims 1 to 3, wherein the processor is further configured to determine Doppler bins of the range-Doppler spectrum based on the range-Doppler coordinate.

5.  The apparatus of claim 4,

    wherein the processor is further configured to:

    obtain an output of a Doppler fast Fourier transform, FFT, of the received sensing signals including a plurality of Doppler bins;
    apply inverse keystone transform for the determined Doppler bins for a plurality of range bins of the range span; and
    calculate a fast range inverse-FFT, IFFT, for the determined Doppler bins;

    preferably wherein the fast range IFFT is calculated over the plurality of range bins of the range span; and/or preferably wherein the fast range IFFT is calculated only for a subset of the plurality of range bins, wherein the subset is determined based on the range-Doppler coordinate.

6.  The apparatus of any one of claims 1 to 5, wherein the processor is further configured to estimate the range-Doppler coordinate outside the Doppler span based on the one or more targets within the Doppler span and a symbol repetition interval of the received sensing signals.

7.  The apparatus of any one of claims 1 to 6, wherein the processor is further configured to determine a symbol repetition interval for a sensing operation to introduce a range migration within the range-Doppler spectrum for the received sensing signals.

8.  The apparatus of any one of claims 1 to 7, wherein the processor is further configured to calculate the range-Doppler spectrum based on the received sensing signals, in which an inverse keystone transform is applied.

9.  The apparatus of any one of claims 1 to 8,

    wherein the one or more targets comprise a plurality of targets;
    wherein the processor is further configured to estimate a respective range-Doppler coordinate outside the Doppler span for each target of the plurality of targets; and
    wherein the processor is further configured to selectively process the range-Doppler spectrum for each respective range-Doppler coordinate.

10. The apparatus of any one of claims 1 to 9,

    wherein the one or more targets comprise a plurality of targets; and
    wherein the processor is further configured to classify each target of the plurality of targets as an ambiguous target or an unambiguous target;
    preferably wherein the processor is further configured to selectively process the range-Doppler spectrum for each ambiguous target of the plurality of targets.

**11.** The apparatus of claim 10,

wherein the processor is further configured to estimate a respective range-Doppler coordinate outside the Doppler span for each ambiguous target of the plurality of targets; and
wherein the processor is further configured to process the range-Doppler spectrum based on the respective range-Doppler coordinate for each ambiguous target.

**12.** The apparatus of any one of claims 10 or 11,
wherein the processor is further configured to classify each target of the plurality of targets based on a respective metric determined for each target, and wherein each respective metric represents a measured range migration effect for the respective target.

**13.** The apparatus of any one of claims 1 to 12,

wherein the processor is further configured to determine a comparison result based on an output of the processing of the range-Doppler spectrum for the range-Doppler coordinate and an output of a processing of the range-Doppler spectrum for the one or more targets within the Doppler span; and
wherein the processor is further configured to determine a velocity of an identified object based on the comparison result.

**14.** The apparatus of any one of claims 1 to 13, further comprising:
a transceiver configured to receive the sensing signals.

**15.** A non-transitory computer-readable medium comprising one or more instructions which, if executed by a processor, cause the processor to:

obtain a range-Doppler periodogram of received sensing signals, wherein the range-Doppler periodogram is representative of one or more targets within a Doppler span;
estimate a range-Doppler coordinate outside the Doppler span for the one or more targets; and
selectively process a range-Doppler spectrum of the received sensing signals for the range-Doppler coordinate within a Doppler interval smaller than the Doppler span;
preferably wherein a target of the one or more targets represents a first range and Doppler estimate of a detected target of the one or more targets; and wherein the range-Doppler coordinate represents a second range and Doppler estimate of the detected target.

**FIG. 1**

**FIG. 2**

300

310

Radio capabilities for in-platform
SI cancellation

TX                                    RX

350

OFDM
modulation

D/A

CP adder

IFFT

320

A/D

CP remover

FFT

OFDM
de-modulation

360

Symbol
Modulator

Input bits

330

RX beamforming (FoV scan)

301

Sensing demod (Element-wise divider) and De-
noise (Improve SNR)                           340

2D range-Doppler periodogram calculation

Range IFFT                          341

Doppler FFT                         342

Constant False Alarm Rate
(CFAR) to detect range-Doppler
bins for AoA processing             343

MEMORY
302

Angular resolution (AoA) processing    344

FIG. 3

Range

401

402

-1/TSRI    -0.5/TSRI    0    0.5/TSRI    1/TSRI    1.5/TSRI

Doppler

**FIG. 4**

500

De-noise 510

Keystone in slow time direction 520

Range iFFT in fast frequency direction 530

Slow time Doppler FFT 540

CFAR 550

...

**FIG. 5A**

501

De-noise 511

Slow time Doppler FFT 521

Inverse Keystone in slow time direction 531

Range iFFT in fast frequency direction 541

CFAR 551

...

**FIG. 5B**

Range

601

602

603

603C

1/TSRI

0

Doppler

-1/TSRI    -0.5/TSRI    0.5/TSRI    1/TSRI    1.5/TSRI

**FIG. 6**

700

| Sensing symbol demod | 710 |

| Zero insertion in time domain to expand the Doppler span | 720 |

| Range-Doppler periodogram estimation | 730 |

| Target detection and rejection of copies | 740 |

To AoA processing:
for each target, only the target in correct Doppler is retained.

**FIG. 7**

FIG. 8

900

910

Doppler ambiguous target?

YES

920

Partial range-Doppler periodogram estimation reveals the sharpest form in correct Doppler.

NO

940

Partial range-Doppler periodogram estimation reveals that the sharpest form lies within the baseline range-Doppler periodogram

NO

Point target?

930

YES

950

Target in point-like form is apparent within the baseline range-Doppler periodogram

**FIG. 9**

**FIG. 10**

**FIG. 11**

**FIG. 12A**

**FIG. 12B**

1300

1310

DE-NOISE

1320

ESTIMATE RANGE-DOPPLER
PERIODOGRAM (BASELINE)

1330

TARGET DETECTION (CFAR) AND
TARGET CLASSIFICATION

1340

AMBIGUOUS TARGET?

YES

NO

1350

ANGULAR RESOLUTION PROCESSING

1341

CALCULATE DOPPLER BINS

1342

IMPLEMENT INVERSE
KEYSTONE TRANSFORM

1343

CALCULATE RANGE BINS

1344

ESTIMATE PARTIAL RANGE-
DOPPLER PERIODOGRAM

1345

RESOLVE AMBIGUITY

**FIG. 13**

1400

Obtaining a range-doppler periodogram of received
sensing signals, wherein the range-doppler periodogram
is representative of one or more targets within a doppler
span — 1410

Estimating a range-doppler coordinate outside the
doppler span for the one or more targets — 1420

Selectively processing a range-doppler spectrum of the
received sensing signals for the range-doppler coordinate
within a doppler interval smaller than the doppler span — 1430

**FIG. 14**

Europäisches
Patentamt
European
Patent Office
Office européen
des brevets

# EUROPEAN SEARCH REPORT

**Application Number**

EP 25 17 1270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 191 279 A1 (SMART RADAR SYSTEM INC [KR]) 7 June 2023 (2023-06-07) | 1-6, 8-12,14, 15 | INV. G01S7/00 G01S7/292 |
| Y | * paragraph [0054] - paragraph [0055] * | 7 | G01S7/35 |
| A | * figures 2,3,12 * | 13 | G01S13/58 |
| | * paragraph [0072] - paragraph [0073] * | | |
| | * paragraph [0067] - paragraph [0068] * | | |
| | * paragraph [0011] * | | |
| | * paragraph [0017] * | | |
| | ----- | | |
| Y | US 7 006 031 B1 (ABATZOGLOU THEAGENIS J [US] ET AL) 28 February 2006 (2006-02-28) | 7 | |
| A | * column 1, line 49 - line 56 * | 1-6,8-15 | |
| | * figure 3A * | | |
| | ----- | | |
| A | US 2023/324509 A1 (WU RYAN HAOYUN [US] ET AL) 12 October 2023 (2023-10-12) | 1-15 | |
| | * paragraph [0033] * | | |
| | * paragraph [0051] - paragraph [0054] * | | |
| | ----- | | |
| A | EP 4 350 389 A1 (HUIZHOU DESAY SV AUTOMOTIVE CO LTD [CN]) 10 April 2024 (2024-04-10) | 1-15 | TECHNICAL FIELDS SEARCHED (IPC) |
| | * figure 2 * | | G01S |
| | * paragraph [0023] * | | |
| | ----- | | |

The present search report has been drawn up for all claims

| Place of search | Date of completion of the search | Examiner |
|---|---|---|
| Munich | 8 August 2025 | Töpfer, Nils-Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 1270

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2025

| Patent document cited in search report | | Publication date | Patent family member(s) | | Publication date |
|---|---|---|---|---|---|
| EP 4191279 | A1 | 07-06-2023 | CN | 116224262 A | 06-06-2023 |
| | | | EP | 4191279 A1 | 07-06-2023 |
| | | | KR | 20230083063 A | 09-06-2023 |
| | | | KR | 20250034338 A | 11-03-2025 |
| | | | US | 2023176187 A1 | 08-06-2023 |
| US 7006031 | B1 | 28-02-2006 | NONE | | |
| US 2023324509 | A1 | 12-10-2023 | CN | 116893389 A | 17-10-2023 |
| | | | EP | 4258010 A1 | 11-10-2023 |
| | | | US | 2023324509 A1 | 12-10-2023 |
| EP 4350389 | A1 | 10-04-2024 | CN | 113534125 A | 22-10-2021 |
| | | | EP | 4350389 A1 | 10-04-2024 |
| | | | US | 2024302520 A1 | 12-09-2024 |
| | | | WO | 2022252311 A1 | 08-12-2022 |

EPO FORM P0459

For more details about this annex : see Official Journal of the European Patent Office, No. 12/82